# EUROPEAN PATENT APPLICATION

(11) **EP 4 576 926 A1**
(43) Date of publication of application: **25.06.2025**
(21) Application number: 23870597.4
(22) Date of filing: 21.09.2023
(51) Int. Cl.: H04W 80/02, H04W 28/02

(54) **DATA TRANSMISSION METHOD AND APPARATUS**

(30) Priority: 30.09.2022 CN 202211214775
(71) Applicant: Huawei Technologies Co., Ltd., Shenzhen, Guangdong 518129 (CN)
(72) Inventor: LIU, Nannan, Shenzhen, Guangdong 518129 (CN); LI, Jiaojiao, Shenzhen, Guangdong 518129 (CN); QIANG, Li, Shenzhen, Guangdong 518129 (CN); FAN, Qiang, Shenzhen, Guangdong 518129 (CN)
(74) Representative: MERH-IP Matias Erny Reichl Hoffmann Patentanwälte PartG mbB
(86) International application number: PCT/CN2023/120511
(87) International publication number: WO 2024/067365

(57) **Abstract**

This application discloses a data transmission method and an apparatus, and relates to the field of communication technologies. In the method, a communication apparatus may obtain first data in a first data set, start a first timer, and update a first state variable to a first count value when the first timer expires. The first state variable indicates a count value of a first piece of data to be delivered, the first count value is greater than a largest count value, data corresponding to the first count value is not received, and the largest count value is a count value of data with a largest count value in a second data set, or the largest count value is a count value of data with a largest count value in received data in the second data set. In this way, if the first timer expires, the communication apparatus may no longer wait for delivering data corresponding to the first state variable before the update, but wait for delivering data whose count value is greater than the largest count value, to reduce a delay in delivering data, so that a receive end can perform decoding as soon as possible.

## Description

"This application claims priority to Patent Application No. 202211214775.X, filed with the China National Intellectual Property Administration on September 30, 2022 and entitled "DATA TRANSMISSION METHOD AND APPARATUS", which is incorporated herein by reference in its entirety".

### TECHNICAL FIELD

This application relates to the field of communication technologies, and in particular, to a data transmission method and an apparatus.

### BACKGROUND

In a communication system, data transmission may be performed between a transmit end and a receive end through a packet data convergence protocol (packet data convergence protocol, PDCP) layer, a radio link control (radio link control, RLC) layer, a media access control (medium access control, MAC) layer, and a physical (physical, PHY) layer.

Specifically, after the data arrives at a PDCP layer of the transmit end, the PDCP layer associates the data with a count value (COUNT), and obtains a PDCP protocol data unit (protocol data unit, PDU) after performing specific processing. A least significant bit (that is, a sequence number (sequence number, SN)) of COUNT is included in a PDCP PDU header. Then, the PDCP layer of the transmit end delivers the PDCP PDU to an RLC layer of the transmit end, and sends the PDCP PDU to the receive end through a MAC layer of the transmit end and a PHY layer of the transmit end. After receiving the data, a PHY layer of the receive end delivers the data to a PDCP layer of the receive end through a MAC layer of the receive end and an RLC layer of the receive end. After receiving the PDCP PDU, the PDCP layer of the receive end may determine COUNT associated with the PDCP PDU, and perform in-order delivery based on COUNT to deliver the data to an upper layer (for example, a service data adaptation protocol (service data adaptation protocol, SDAP) layer or a radio resource control (radio resource control, RRC) layer). However, if the PDCP layer of the receive end performs in-order delivery based on a conventional technology, a delay in delivering the data to the upper layer is relatively large, and decoding at the receive end is affected.

### SUMMARY

Embodiments of this application provide a data transmission method and an apparatus, to reduce a delay in delivering data to a receive end, so that the receive end can perform decoding as soon as possible.

To achieve the foregoing objective, the following technical solutions are used in embodiments of this application.

According to a first aspect, a data transmission method is provided. The method may be performed by a communication apparatus; may be performed by a module used in a communication apparatus, for example, a chip, a chip system, or a circuit; or may be implemented by a logical module or software that can implement all or some functions of a communication apparatus. This is not limited. For ease of description, an example in which the method is performed by a communication apparatus is used below for description. The method includes: obtaining first data in a first data set, and starting a first timer; and when the first timer expires, performing one or more of the following operations: updating a first state variable to a first count value; delivering at least one piece of received data whose count value is greater than a largest count value; discarding the first data set, or delivering the first data set; or discarding data whose count value is less than a smallest count value, or delivering the data whose count value is less than the smallest count value, where the first count value is greater than the largest count value, data corresponding to the first count value is not received, and the first state variable indicates a count value of a first piece of data to be delivered; a count value of the at least one piece of data is consecutive, and the at least one piece of data includes data whose count value is the largest count value+1; the smallest count value is a count value of data with a smallest count value in the first data set, or the smallest count value is a count value of data with a smallest count value in received data in the first data set; and the largest count value is a count value of data with a largest count value in a second data set, or the largest count value is a count value of data with a largest count value in received data in the second data set.

Based on the method provided in the first aspect, when the first timer expires, the communication apparatus can process data in time, to reduce a delay in delivering the data by the communication apparatus, so that the communication apparatus can perform decoding as soon as possible.

For example, the communication apparatus updates the first state variable to the first count value, so that the communication apparatus does not need to wait for data whose count value is less than the first count value, thereby avoiding a case that a transmit end has stopped sending data in the second data set, but the communication apparatus is still waiting for receiving the data in the second data set. This can reduce a delay in delivering data (for example, subsequent data) by a second communication apparatus, so that the communication apparatus can perform decoding as soon as possible.

For example, the communication apparatus delivers at least one piece of received but undelivered data whose count value is greater than the largest count value, so that the communication apparatus can deliver the data whose count value is greater than the largest count value in time, to reduce a delay in delivering data by the communication apparatus, and enable the communication apparatus to perform decoding as soon as possible.

For example, the first data set is discarded or the first data set is delivered, so that the communication apparatus can discard the first data set in time or deliver the first data set in time, to shorten time for the communication apparatus to wait for receiving data, thereby reducing a delay in delivering data by the communication apparatus, and enabling the communication apparatus to perform decoding as soon as possible.

For example, the data whose count value is less than the smallest count value is discarded, or the data whose count value is less than the smallest count value is delivered, so that the communication apparatus can discard the data whose count value is less than the smallest count value in time, or deliver the data whose count value is less than the smallest count value in time, to shorten time for the communication apparatus to wait for receiving data, thereby reducing a delay in delivering data by the communication apparatus, and enabling the communication apparatus to perform decoding as soon as possible.

In a possible implementation, the first data set includes some or all data in the second data set.

Based on the foregoing possible implementation, if the first data set includes all data in the second data set, the communication apparatus may deliver data after the first data set; or if the first data set includes some data in the second data set, the communication apparatus may deliver data after the second data set.

In a possible implementation, the first data is a first piece of obtained data in the first data set.

Based on the foregoing possible implementation, the communication apparatus may start the first timer when obtaining data in the first data set for the first time, to monitor a delivery status of the data in the first data set.

In a possible implementation, the first data set includes a data burst or a protocol data unit set.

Based on the foregoing possible implementation, the communication apparatus may control, based on different granularities, maximum duration for receiving data, for example, control, by using a data burst as a granularity, the maximum duration for receiving data, or control, by using a protocol data unit as a granularity, the maximum duration for receiving data.

In a possible implementation, the first timer is associated with the first data set.

Based on the foregoing possible implementation, the communication apparatus may start the timer by using a data set as a granularity.

In a possible implementation, the method further includes: when a first condition is met, stopping the first timer, where the first condition includes any one or more of the following: the first data set or the second data set is discarded; or data in the first data set or data in the second data set is delivered; or the data in the first data set or the data in the second data set does not exist in a reception buffer; or the first state variable is greater than the largest count value.

Based on the foregoing possible implementation, when the first condition is met, the communication apparatus may stop the first timer, to avoid meaningless running of the first timer, and reduce burden/complexity of maintaining the timer by a second terminal device.

In a possible implementation, the method further includes: starting a second timer, where the second timer is associated with a third data set, and the third data set is different from the first data set.

Based on the foregoing possible implementation, the communication apparatus may start the second timer, to monitor a delivery status of data in the third data set.

In a possible implementation, the starting a second timer includes: if data in the third data set is not obtained, starting the second timer, where a count value of data with a largest count value in the third data set is less than the smallest count value.

Based on the foregoing possible implementation, the delivery status of the data in the third data set may be monitored in time.

In a possible implementation, duration of the second timer is less than duration of the first timer.

Based on the foregoing possible implementation, because a count value of data associated with the second timer is less than a count value of data associated with the first timer, the data associated with the second timer should be sent before the data associated with the first timer. In this case, time at which the data associated with the second timer is discarded by the transmit end should be earlier than time at which the data associated with the first timer is discarded by the transmit end. Therefore, the duration of the second timer is set to be less than the duration of the first timer, to avoid unnecessary waiting of the communication apparatus.

In a possible implementation, the discarding the first data set, or delivering the first data set includes: discarding the first data set when a packet loss rate corresponding to the first data set is greater than or equal to a first threshold; or delivering the first data set when the packet loss rate corresponding to the first data set is less than the first threshold.

Based on the foregoing possible implementation, the communication apparatus may determine, based on the packet loss rate corresponding to the first data set, whether to discard the first data set.

In a possible implementation, the discarding data whose count value is less than a smallest count value, or delivering received data whose count value is less than the smallest count value includes: when a packet loss rate corresponding to the data whose count value is less than the smallest count value is greater than or equal to a second threshold, discarding the data whose count value is less than the smallest count value; or when the packet loss rate corresponding to the data whose count value is less than the smallest count value is less than the second threshold, delivering the received data whose count value is less than the smallest count value.

Based on the foregoing possible implementation, the communication apparatus may determine, based on the packet loss rate corresponding to the data whose count value is less than the smallest count value, whether to discard the data.

In a possible implementation, the data whose count value is less than the smallest count value and the first data set belong to a same data burst.

According to a second aspect, a data transmission method is provided. The method may be performed by a communication apparatus; may be performed by a module used in a communication apparatus, for example, a chip, a chip system, or a circuit; or may be implemented by a logical module or software that can implement all or some functions of a communication apparatus. This is not limited. For ease of description, an example in which the method is performed by a communication apparatus is used below for description. The method includes: obtaining first data in a first data set, and starting a third timer; and when the third timer expires, performing one or more of the following operations: updating a first state variable to a second count value; delivering at least one piece of received data whose count value is greater than a count value of the first data; discarding the first data set, or delivering the first data; or discarding data whose count value is less than a smallest count value, or delivering received data whose count value is less than the count value of the first data, where the second count value is greater than the count value of the first data, data corresponding to the second count value is not received, and the first state variable indicates a count value of a first piece of data to be delivered; a count value of the at least one piece of data is consecutive, and the at least one piece of data includes data whose count value is a largest count value+1, or the at least one piece of data includes data whose count value is the count value of the first data+1; the largest count value is a count value of data with a largest count value in a second data set, or the largest count value is a count value of data with a largest count value in received but undelivered data in the second data set; and the smallest count value is a count value of data with a smallest count value in the first data set, or the smallest count value is a count value of data with a smallest count value in received but undelivered data in the first data set.

Based on the method provided in the second aspect, when the third timer expires, the communication apparatus may discard, in time, data that may be unable to be received (data that is in the first data set and that is not received, and/or data that is not received and whose count value is less than the smallest count value), or deliver received data (for example, the first data and/or received data whose count value is less than the count value of the first data) in time, and/or update the first state variable in time, instead of continuing to wait for to-be-delivered data that may be unable to be received, thereby reducing a delay in delivering data by a second communication apparatus. In addition, when a second condition is met, the second communication apparatus may stop the third timer, to avoid meaningless running of the first timer, and reduce burden/complexity of maintaining the timer by a second terminal device.

In a possible implementation, the first data set includes some or all data in the second data set.

Based on the foregoing possible implementation, if the first data set includes all data in the second data set, the communication apparatus may deliver data after the first data set; or if the first data set includes some data in the second data set, the communication apparatus may deliver data after the second data set.

In a possible implementation, the second count value is greater than the largest count value.

Based on the foregoing possible implementation, the communication apparatus may deliver, in time, data whose count value is greater than or equal to the second count value.

In a possible implementation, the first data set includes a data burst or a protocol data unit set.

In a possible implementation, the third timer is associated with the first data.

Based on the foregoing possible implementation, the communication apparatus may start the timer by using data as a granularity.

In a possible implementation, the method further includes: when a second condition is met, stopping the third timer, where the second condition includes any one or more of the following: the first data is discarded; or the first data set or the second data set is discarded; or the first data is delivered; or data in the first data set or data in the second data set is delivered; or the first data does not exist in a reception buffer; or the data in the first data set or the data in the second data set does not exist in the reception buffer; or the first state variable is greater than the count value of the first data; or the first state variable is greater than the largest count value.

Based on the foregoing possible implementation, when the second condition is met, the communication apparatus may stop the third timer, to avoid meaningless running of the first timer, and reduce burden/complexity of maintaining the timer by the second terminal device.

In a possible implementation, the method further includes: starting a fourth timer, where the fourth timer is associated with second data, and the second data is different from the first data.

Based on the foregoing possible implementation, the communication apparatus may start the fourth timer, to monitor a delivery status of the second data.

In a possible implementation, the starting a fourth timer includes: if the second data is not obtained, starting the fourth timer, where a count value of the second data is less than the count value of the first data.

Based on the foregoing possible implementation, the delivery status of the second data may be monitored in time.

In a possible implementation, duration of the fourth timer is less than duration of the third timer.

Based on the foregoing possible implementation, because the second data should be sent before the first data, time at which the second data is discarded by a transmit end should be earlier than time at which the first data is discarded by the transmit end. Therefore, the duration of the fourth timer associated with the second data is set to be less than the duration of the third timer associated with the first data, to avoid unnecessary waiting of the communication apparatus.

In a possible implementation, the discarding the first data set, or delivering the first data includes: discarding the first data set if a packet loss rate corresponding to the first data set is greater than or equal to a third threshold; or delivering the first data if the packet loss rate corresponding to the first data set is less than the third threshold.

Based on the foregoing possible implementation, the communication apparatus may determine, based on the packet loss rate corresponding to the first data set, whether to discard the first data set.

In a possible implementation, the discarding data whose count value is less than a smallest count value, or delivering received data whose count value is less than the count value of the first data includes: if a packet loss rate corresponding to the data whose count value is less than the smallest count value is greater than or equal to a fourth threshold, discarding the data whose count value is less than the smallest count value; or if the packet loss rate corresponding to the data whose count value is less than the smallest count value is less than the fourth threshold, delivering the received data whose count value is less than the count value of the first data.

Based on the foregoing possible implementation, the communication apparatus may determine, based on the packet loss rate corresponding to the data whose count value is less than the smallest count value, whether to discard the data.

According to a third aspect, a communication apparatus is provided, to implement the foregoing method. The communication apparatus may be the communication apparatus in the first aspect, or an apparatus including the communication apparatus; may be a module in the communication apparatus in the first aspect, for example, a chip, a chip system, or a circuit; or may be implemented by a logical module or software that can implement some or all functions of the communication apparatus. Alternatively, the communication apparatus may be the communication apparatus in the second aspect, or an apparatus including the communication apparatus in the second aspect; may be a module in the communication apparatus in the second aspect, for example, a chip, a chip system, or a circuit; or may be implemented by a logical module or software that can implement some or all functions of the communication apparatus. The communication apparatus includes a corresponding module, unit, or means (means) for implementing the foregoing method. The module, the unit, or the means may be implemented by hardware, software, or hardware executing corresponding software. The hardware or the software includes one or more modules or units corresponding to the foregoing functions.

With reference to the third aspect, in a possible implementation, the communication apparatus may include a processing module and a receiving module. The processing module may be configured to implement a processing function according to any one of the foregoing aspects and any one of the possible implementations of the foregoing aspects. The processing module may be, for example, a processor. The receiving module may also be referred to as a receiving unit, and is configured to implement a receiving function according to any one of the foregoing aspects and any one of the possible implementations of the foregoing aspects. The receiving module may include a receiving circuit, a receiving machine, a receiver, or a communication interface.

According to a fourth aspect, a communication apparatus is provided, including a processor. The processor is configured to: be coupled to a memory and perform, after reading instructions in the memory, the method according to any one of the foregoing aspects based on the instructions. The communication apparatus may be the communication apparatus in the first aspect, or an apparatus including the communication apparatus; may be a module in the communication apparatus in the first aspect, for example, a chip, a chip system, or a circuit; or may be implemented by a logical module or software that can implement some or all functions of the communication apparatus. Alternatively, the communication apparatus may be the communication apparatus in the second aspect, or an apparatus including the communication apparatus in the second aspect; may be a module in the communication apparatus in the second aspect, for example, a chip, a chip system, or a circuit; or may be implemented by a logical module or software that can implement some or all functions of the communication apparatus.

With reference to the fourth aspect, in a possible implementation, the communication apparatus further includes a memory. The memory is configured to store necessary program instructions and data.

With reference to the fourth aspect, in a possible implementation, the communication apparatus is a chip or a chip system. Optionally, when the communication apparatus is a chip system, the communication apparatus may include a chip, or may include a chip and another discrete component.

According to a fifth aspect, a communication apparatus is provided, including a processor and an interface circuit. The interface circuit is configured to: receive a computer program or instructions, and transmit the computer program or the instructions to the processor. The processor is configured to execute the computer program or the instructions, to enable the communication apparatus to perform the method according to any one of the foregoing aspects. The communication apparatus may be the communication apparatus in the first aspect, or an apparatus including the communication apparatus; may be a module in the communication apparatus in the first aspect, for example, a chip, a chip system, or a circuit; or may be implemented by a logical module or software that can implement some or all functions of the communication apparatus. Alternatively, the communication apparatus may be the communication apparatus in the second aspect, or an apparatus including the communication apparatus in the second aspect; may be a module in the communication apparatus in the second aspect, for example, a chip, a chip system, or a circuit; or may be implemented by a logical module or software that can implement some or all functions of the communication apparatus.

With reference to the fifth aspect, in a possible implementation, the communication apparatus is a chip or a chip system. Optionally, when the communication apparatus is a chip system, the communication apparatus may include a chip, or may include a chip and another discrete component.

According to a sixth aspect, a computer-readable storage medium is provided. The computer-readable storage medium stores instructions, and when the instructions are run on a computer, the computer is enabled to perform the method according to any one of the foregoing aspects.

According to a seventh aspect, a computer program product including instructions is provided. When the computer program product runs on a computer, the computer is enabled to perform the method according to any one of the foregoing aspects.

According to an eighth aspect, a data transmission method is provided. The method may be performed by a first communication apparatus/a second communication apparatus; may be performed by a module used in the first communication apparatus/the second communication apparatus, for example, a chip, a chip system, or a circuit; or may be implemented by a logical module or software that can implement all or some functions of the first communication apparatus/the second communication apparatus. This is not limited. For ease of description, an example in which the method is performed by the first communication apparatus and the second communication apparatus is used below for description. The method includes: The first communication apparatus sends first data in a first data set to the second communication apparatus; the second communication apparatus obtains the first data, and starts a first timer; and when the first timer expires, the second communication apparatus performs one or more of the following operations: updating a first state variable to a first count value; delivering at least one piece of received but undelivered data whose count value is greater than a largest count value; discarding the first data set, or delivering the first data set; or discarding data whose count value is less than a smallest count value, or delivering the data whose count value is less than the smallest count value, where the first count value is greater than the largest count value, data corresponding to the first count value is not received, and the first state variable indicates a count value of a first piece of data to be delivered; a count value of the at least one piece of data is consecutive, and the at least one piece of data includes data whose count value is the largest count value+1; the smallest count value is a count value of data with a smallest count value in the first data set, or the smallest count value is a count value of data with a smallest count value in received but undelivered data in the first data set; and the largest count value is a count value of data with a largest count value in a second data set, or the largest count value is a count value of data with a largest count value in received data in the second data set.

In a possible implementation, the first data set includes some or all data in the second data set.

In a possible implementation, the first data is a first piece of obtained data in the first data set.

In a possible implementation, the first data set includes a data burst or a protocol data unit set.

In a possible implementation, the first timer is associated with the first data set.

In a possible implementation, the method further includes: When a first condition is met, the second communication apparatus stops the first timer, where the first condition includes any one or more of the following: the first data set or the second data set is discarded; or data in the first data set or data in the second data set is delivered; or the data in the first data set or the data in the second data set does not exist in a reception buffer; or the first state variable is greater than the largest count value.

In a possible implementation, the method further includes: The second communication apparatus starts a second timer, where the second timer is associated with a third data set, and the third data set is different from the first data set.

In a possible implementation, that the second communication apparatus starts a second timer includes: If data in the third data set is not obtained, the second communication apparatus starts the second timer, where a count value of data with a largest count value in the third data set is less than the smallest count value.

In a possible implementation, duration of the second timer is less than duration of the first timer.

In a possible implementation, the discarding the first data set, or delivering received but undelivered data in a first data set includes: discarding the first data set when a packet loss rate corresponding to the first data set is greater than or equal to a first threshold; or delivering the received but undelivered data in the first data set when the packet loss rate corresponding to the first data set is less than the first threshold.

In a possible implementation, the discarding data whose count value is less than a smallest count value, or delivering received but undelivered data whose count value is less than the smallest count value includes: when a packet loss rate corresponding to the data whose count value is less than the smallest count value is greater than or equal to a second threshold, discarding the data whose count value is less than the smallest count value; or when the packet loss rate corresponding to the data whose count value is less than the smallest count value is less than the second threshold, delivering the received but undelivered data whose count value is less than the smallest count value.

In a possible implementation, the data whose count value is less than the smallest count value and the first data set belong to a same data burst.

According to a ninth aspect, a data transmission method is provided. The method may be performed by a first communication apparatus/a second communication apparatus; may be performed by a module used in the first communication apparatus/the second communication apparatus, for example, a chip, a chip system, or a circuit; or may be implemented by a logical module or software that can implement all or some functions of the first communication apparatus/the second communication apparatus. This is not limited. For ease of description, an example in which the method is performed by the first communication apparatus and the second communication apparatus is used below for description. The method includes: The first communication apparatus sends first data in a first data set to the second communication apparatus; the second communication apparatus obtains the first data in the first data set, and starts a third timer; and when the third timer expires, the second communication apparatus performs one or more of the following operations: updating a first state variable to a second count value; delivering at least one piece of received but undelivered data whose count value is greater than a count value of the first data; discarding the first data set, or delivering the first data; or discarding data whose count value is less than a smallest count value, or delivering received but undelivered data whose count value is less than the count value of the first data, where the second count value is greater than the count value of the first data, data corresponding to the second count value is not received, and the first state variable indicates a count value of a first piece of data to be delivered; a count value of the at least one piece of data is consecutive, and the at least one piece of data includes data whose count value is a largest count value+1, or the at least one piece of data includes data whose count value is the count value of the first data+1; the largest count value is a count value of data with a largest count value in a second data set, or the largest count value is a count value of data with a largest count value in received but undelivered data in the second data set; and the smallest count value is a count value of data with a smallest count value in the first data set, or the smallest count value is a count value of data with a smallest count value in received but undelivered data in the first data set.

In a possible implementation, the first data set includes some or all data in the second data set.

In a possible implementation, the second count value is greater than the largest count value.

In a possible implementation, the first data set includes a data burst or a protocol data unit set.

In a possible implementation, the third timer is associated with the first data.

In a possible implementation, the method further includes: When a second condition is met, the second communication apparatus stops the third timer, where the second condition includes any one or more of the following: discarding the first data; the first data set or the second data set is discarded; or the first data is delivered; or data in the first data set or data in the second data set is delivered; or the first data does not exist in a reception buffer; or the data in the first data set or the data in the second data set does not exist in the reception buffer; or the first state variable is greater than the count value of the first data; or the first state variable is greater than the largest count value.

In a possible implementation, the method further includes: The second communication apparatus starts a fourth timer, where the fourth timer is associated with second data, and the second data is different from the first data.

In a possible implementation, that the second communication apparatus starts a fourth timer includes: If the second data is not obtained, the second communication apparatus starts the fourth timer, where a count value of the second data is less than the count value of the first data.

In a possible implementation, duration of the fourth timer is less than duration of the third timer.

In a possible implementation, the discarding the first data set, or delivering the first data includes: discarding the first data set if a packet loss rate corresponding to the first data set is greater than or equal to a third threshold; or delivering the first data if the packet loss rate corresponding to the first data set is less than the third threshold.

In a possible implementation, the discarding data whose count value is less than a smallest count value, or delivering received but undelivered data whose count value is less than the count value of the first data includes: if a packet loss rate corresponding to the data whose count value is less than the smallest count value is greater than or equal to a fourth threshold, discarding the data whose count value is less than the smallest count value; or if the packet loss rate corresponding to the data whose count value is less than the smallest count value is less than the fourth threshold, delivering the received but undelivered data whose count value is less than the count value of the first data.

For technical effects achieved by any one of the possible implementations of the third aspect to the ninth aspect, refer to technical effects achieved by any one of the first aspect and the second aspect or different possible implementations of the first aspect or the second aspect. Details are not described herein again.

It may be understood that the solutions in the foregoing aspects may be combined on a premise that the solutions are not contradictory.

### BRIEF DESCRIPTION OF DRAWINGS

FIG. 1A is a diagram of a structure of a GOP;
FIG. 1B is a diagram of a protocol stack;
FIG. 1C is a first diagram of a relationship between a PDU and a service data unit (service data unit, SDU);
FIG. 1D is a diagram of a PDU;
FIG. 1E is a diagram of a count value;
FIG. 2A is a first diagram of delivering a PDCP PDU;
FIG. 2B is a second diagram of delivering a PDCP PDU;
FIG. 3 is a diagram of an architecture of a communication system according to an embodiment of this application;
FIG. 4 is a diagram of a hardware structure of a communication apparatus according to an embodiment of this application;
FIG. 5 is a first schematic flowchart of a data transmission method according to an embodiment of this application;
FIG. 6 is a diagram of delivering data by a second communication apparatus according to an embodiment of this application;
FIG. 7 is a second schematic flowchart of a data transmission method according to an embodiment of this application;
FIG. 8 is a third schematic flowchart of a data transmission method according to an embodiment of this application;
FIG. 9A is a fourth schematic flowchart of a data transmission method according to an embodiment of this application;
FIG. 9B is a fifth schematic flowchart of a data transmission method according to an embodiment of this application; and
FIG. 10 is a diagram of a structure of a communication apparatus according to an embodiment of this application.

### DESCRIPTION OF EMBODIMENTS

To better understand embodiments of this application, before embodiments of this application are described, terms used in this application are first briefly described. It may be understood that, the explanations and descriptions are intended to make embodiments of this application easier to understand, but should not be construed as a limitation on the protection scope claimed in embodiments of this application.

### 1. Extended reality (extended reality, XR):

XR may be various environments that combine reality and virtuality and that are generated by a computing technology and a wearable device, and human-computer interaction, and mainly includes reality-virtuality interaction technologies such as virtual reality (virtual reality, VR), augmented reality (augmented reality, AR), and mixed reality (mixed reality, MR). To improve experience of interaction between human and a virtual world, an XR service has strict requirements on a bandwidth and a delay.

For example, during downlink transmission, an encoder of a server generates data content at a fixed frequency (for example, 60 Hz or 120 Hz), and transmits the data content to an XR terminal through a core network and a RAN. For example, during uplink transmission, the XR terminal may capture an image of a current scene through a built-in camera and continuously upload the image of the current scene to the server at a specific frequency (for example, 60 Hz or 120 Hz).

For example, generally, the XR service periodically generates data at a frame rate. For example, a service model of an XR type service in a downlink direction roughly includes AR/VR and cloud gaming CG. An AR/VR frame rate may be 60 fps, to be specific, 60 frames of video images are generated per second, and one video frame appears about every 16.66 ms. Alternatively, the AR/VR frame rate may be 120 fps, to be specific, 120 frames of video images are generated per second, and one video frame appears about every 8.33 ms. A CG frame rate may be 60 fps or 120 fps, to be specific, 60 frames of video images are generated per second or 120 frames of video images are generated per second. For example, a delay requirement of the XR service may be 10 ms, 30 ms, or the like.

In addition, in an actual transmission system, a data jitter (jitter) occurs due to a data encoding delay and a network transmission delay. Generally, it may be considered that the jitter complies with a truncated Gaussian distribution, and a truncated range is approximately [-4 ms, 4 ms].

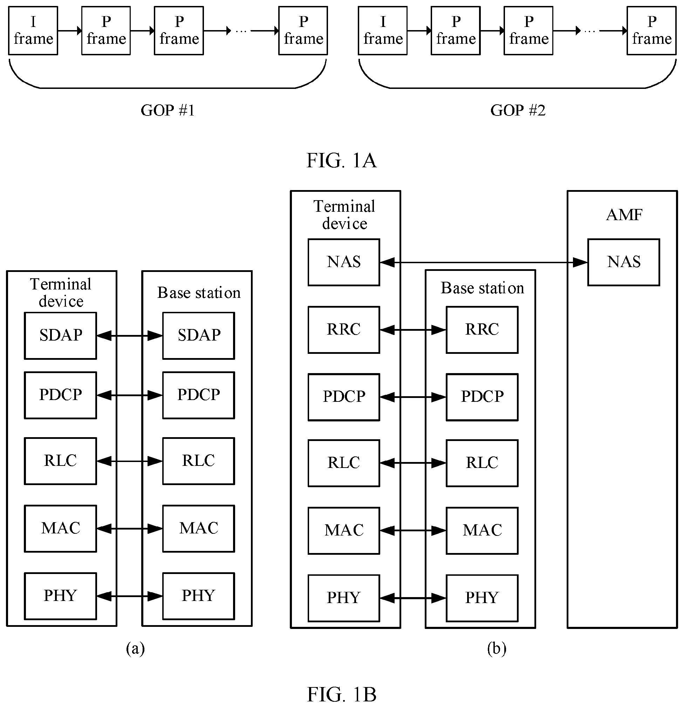

For example, for an XR video service, an image may be encoded in a GOP encoding manner and/or a slice encoding manner during encoding. For example, in the slice encoding manner, one video frame may include one I-slice and one or more P-slices. For example, in the GOP encoding manner, one GOP may include one I-frame, or one GOP includes one I-frame and one or more P-frames. Optionally, the GOP may further include a B-frame. For example, the I-frame is an internal encoding frame (which may also be referred to as an intra-frame encoding frame, a key frame, an important frame, or the like), and the I-frame is a reference frame of the P-frame and/or the B-frame, and has a feature of independent encoding and decoding. For example, the P-frame is a forward predictive frame (which may also be referred to as a forward-predicted encoding frame, a forward reference frame, a dependent frame, a non-key frame, or the like). When the P-frame is decoded, a previous closest I-frame or P-frame needs to be referred to, and the P-frame may be a reference frame of a subsequent P-frame and/or B-frame. For example, the B-frame is a bi-directional interpolated prediction frame (bi-directional interpolated prediction frame), and may also be referred to as a dependent frame, a non-key frame, or the like. When the B-frame is decoded, a previous closest I-frame or P-frame and a subsequent closest P-frame need to be referred to. For example, the I-frame is a complete picture, and the P-frame records a change relative to the I-frame. If there is no I-frame, the P-frame cannot be decoded. Therefore, a transmission priority of the I-frame needs to be higher than that of the P-frame. If an I-frame fails to be transmitted (for example, the I-frame fails to be transmitted when a delay requirement of the I-frame is met) during transmission even if a subsequent video frame (for example, a P-frame) that depends on the I-frame is successfully transmitted, a receive side still cannot implement correct decoding. FIG. 1A is a diagram of a structure of a GOP according to an embodiment of this application. As shown in FIG. 1A, one GOP sequence (for example, one GOP #1 or one GOP #2) includes one I-frame and a plurality of P-frames.

For example, a data burst may also be referred to as a data burst, and is a set of PDUs generated and sent by an application in a short period time (for example, A set of data multiple PDUs generated and sent by the application in a short period of time).

For example, a PDU set may include one or more PDUs, and the PDU set is carried on a payload of an information unit generated at an application level (for example, A PDU Set is composed of one or more PDUs carrying the payload of one unit of information generated at the application level (for example, a frame or video slice for XRM Services, as used in TR 26.926 [27])). For example, the PDU set includes a frame (frame) or a slice (slice). For example, one PDU set includes one frame (frame) or one slice (slice).

For example, in some implementations, an application layer needs all PDUs in the PDU set to use a corresponding information unit, or the application layer needs all PDUs in the PDU set to obtain (decode) or use a corresponding information unit. For example, in other implementations, when some PDUs are lost, the application layer can still recover all or a part of the information unit. (In some implementations all PDUs in a PDU Set are needed by the application layer to use the corresponding unit of information. In other implementations, the application layer can still recover parts all or of the information unit, when some PDUs are missing.)

Optionally, one data burst includes at least one PDU set.

For example, a data burst 1 may be associated with one or more data bursts, and the one or more data bursts need to depend on the data burst 1. If the data burst 1 is discarded, the one or more data bursts may be unable to be decoded. For example, a PDU set 1 may be associated with one or more PDU sets, and the one or more PDU sets need to depend on the PDU set 1. If the PDU set 1 is discarded, the one or more PDU sets may be unable to be decoded.

### 2. New radio (new radio, NR) protocol architecture:

An NR protocol architecture in embodiments of this application may be divided into a user-plane protocol stack and a control-plane protocol stack. The following describes the foregoing two protocol stacks in detail with reference to FIG. 1B. FIG. 1B is described by using interaction between a terminal device and a base station as an example, where (a) in FIG. 1B shows the user-plane protocol stack, and (b) in FIG. 1B shows the control-plane protocol stack.

The user-plane protocol stack is a protocol cluster used for user data transmission. As shown in (a) in FIG. 1B, the user-plane protocol stack may include five layers: a PHY layer, a MAC layer, an RLC layer, a PDCP layer, and an SDAP layer.

The control-plane protocol stack architecture is a protocol stack used for control signaling transmission of a system. As shown in (b) in FIG. 1B, the control-plane protocol stack may include a non-access stratum (non-access stratum, NAS), an RRC layer, a PDCP layer, an RLC layer, a MAC layer, and a PHY layer.

For example, the PHY layer may be responsible for processing one or more of encoding and decoding, modulation and demodulation, multi-antenna mapping, and another physical layer function. For example, the MAC layer may be responsible for one or more of hybrid automatic repeat request (hybrid automatic repeat request, HARQ), uplink scheduling, downlink scheduling, and the like. For example, the RLC layer may be responsible for one or more of segmentation, reassembly, retransmission processing, and the like. For example, the PDCP layer may be responsible for one or more of header compression/decompression, security (an encryption function and an integrity protection function), retransmission, in-order delivery, and the like. For example, the RRC layer may be responsible for one or more of functions such as broadcast, paging, RRC connection management, radio bearer control, mobility management, and terminal device measurement reporting and control. For example, the NAS layer may be responsible for one or more of functions such as identity verification, mobility management, and security control.

For the user-plane protocol stack, an NR protocol stack has an additional SDAP layer compared with a long term evolution (long term evolution, LTE) protocol stack. For the control-plane protocol stack, the NR protocol stack is similar to the LTE protocol stack.

Optionally, in embodiments of this application, each layer in the protocol stack may be replaced with an entity. For example, the PDCP layer may be replaced with a PDCP entity, and the SDAP layer may be replaced with an SDAP entity. A unified description is provided herein, and details are not described below.

### 3. PDU and SDU (service data unit, service data unit):

At each protocol layer (for example, any one or more of an SDAP layer, an RRC layer, a PDCP layer, an RLC layer, and a MAC layer), an SDU at an N^{th} layer corresponds to a PDU at an upper layer. In other words, a PDU at a current layer is an SDU at a lower layer, and an SDU at a current layer is a PDU at an upper layer.

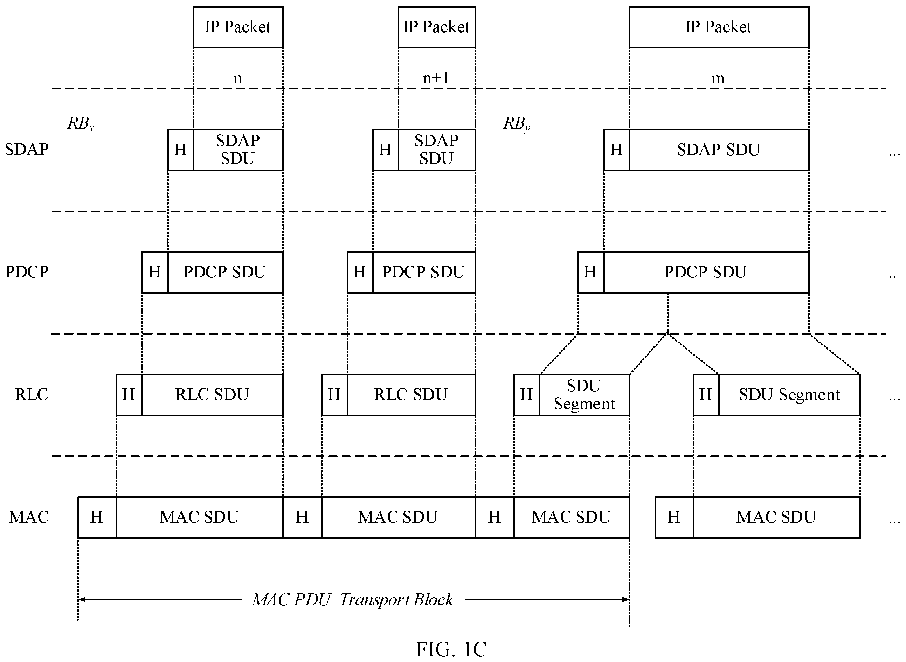

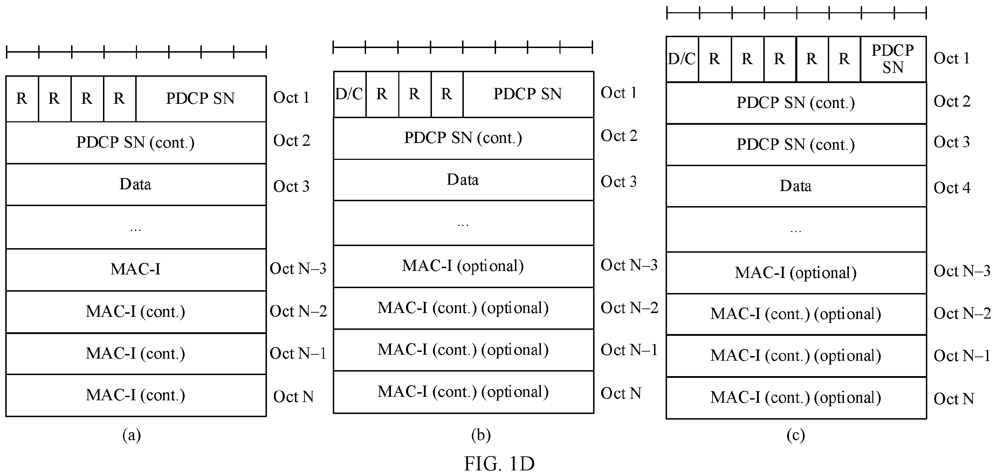

With reference to FIG. 1C and FIG. 1D, the following describes in detail a relationship between a PDU and an SDU by using interaction between a terminal device and a base station as an example.

FIG. 1C is a diagram of a relationship between a PDU and an SDU at protocol layers according to an embodiment of this application. As shown in FIG. 1C, for a transmit end, after an RRC layer generates to-be-transmitted signaling (for example, an RRC message or an RRC PDU), or after an SDAP layer obtains to-be-transmitted data, the RRC layer may deliver the to-be-transmitted signaling to a corresponding PDCP layer, or the SDAP layer may deliver the to-be-transmitted data to the corresponding PDCP layer. For ease of description, the signaling is referred to as/replaced with data below. For data (for example, a PDCP SDU) received from the RRC layer or the SDAP layer, the PDCP layer may perform specific processing or may not perform processing to obtain a PDCP PDU, and then deliver the PDCP PDU to an RLC layer corresponding to the PDCP layer. For data (for example, an RLC SDU) received from the PDCP layer, the RLC layer may perform specific processing or may not perform processing to obtain an RLC PDU, and then deliver the RLC PDU to a corresponding MAC layer. For data (for example, a MAC SDU) received from the RLC layer, the MAC layer may perform specific processing or may not perform processing to obtain a MAC PDU, and then deliver the MAC PDU to a PHY layer. The PHY layer may perform specific processing or may not perform processing, and the PHY layer performs air interface transmission.

Correspondingly, for a receive end, after receiving data (for example, a transport block (transport block, TB)), a PHY layer delivers the data to a MAC layer. For data (for example, a TB or a MAC PDU) received from the PHY, the MAC layer may perform specific processing or may not perform processing to obtain a MAC SDU, and then deliver the MAC SDU to a corresponding RLC layer. For data (for example, an RLC PDU) received from the MAC layer, the RLC layer may perform specific processing or may not perform processing to obtain an RLC SDU, and then deliver the RLC SDU to a corresponding PDCP layer. For data (for example, a PDCP PDU) received from the RLC layer, the PDCP layer may perform specific processing or may not perform processing to obtain a PDCP SDU, and then deliver the PDCP SDU to an RRC layer or an SDAP layer. For data (for example, an RRC message or an RRC PDU) received from the PDCP layer, which may also be referred to as signaling, the RRC layer performs RRC decoding or ASN.1 decoding, to determine a meaning of the received data. Alternatively, for data (for example, an SDAP PDU) received from the PDCP layer, the SDAP layer may perform specific processing or may not perform processing to obtain an SDAP SDU, and then deliver the SDAP PDU to an upper layer (for example, an application layer).

For sending and receiving of data (or signaling), the data may be correspondingly encapsulated/processed at each layer, or may be transparently transmitted. For example, for the transmit end, data received by a layer from an upper layer of the layer is referred to as an SDU, and data delivered by the layer to a lower layer is referred to as a PDU. For the layer, the data received from the upper layer and the data delivered to the lower layer may be the same (for example, transparently transmitted), or may be different (for example, the data received from the upper layer is encapsulated/processed at the layer to obtain the data delivered to the lower layer. For example, data received by the PDCP layer from an upper layer is referred to as a PDCP SDU, and data sent by the PDCP layer to a lower layer is referred to as a PDCP PDU; data received by the RLC layer from an upper layer is referred to as an RLC SDU, and data sent by the RLC layer to a lower layer is referred to as an RLC PDU; and data received by the MAC layer from an upper layer is referred to as a MAC SDU, and data sent by the MAC layer to a lower layer is referred to as a MAC PDU or a TB. For example, for the receive end, data received by a layer from a lower layer of the layer is referred to as a PDU, and data delivered by the layer to an upper layer is referred to as an SDU. For the layer, the data received from the lower layer and the data delivered to the upper layer may be the same (for example, transparently transmitted), or may be different (for example, the data received from the lower layer is processed at the layer to obtain the data delivered to the upper layer). For example, data received by the PDCP layer from a lower layer is referred to as a PDCP PDU, and data sent by the PDCP layer to an upper layer is referred to as a PDCP SDU; data received by the RLC layer from a lower layer is referred to as an RLC PDU, and data sent by the RLC layer to an upper layer is referred to as an RLC SDU; and data received by the MAC layer from a lower layer is referred to as a MAC PDU or a TB, and data sent by the MAC layer to an upper layer is referred to as a MAC SDU.

An upper layer and a lower layer in this embodiment of this application are relative concepts. For example, the RLC layer is used as an example. For the RRC layer, the RLC layer may be a lower layer of the RRC layer, but for the MAC layer, the RLC layer may be an upper layer of the MAC layer. For another example, a lower layer of the PDCP layer may include any one or more of the following: the PHY layer, the MAC layer, and the RLC layer. For another example, an upper layer of the PDCP layer may include any one or more of the following: the RRC layer, the SDAP layer, and the application layer.

FIG. 1D is a diagram of a PDCP PDU according to an embodiment of this application, where (a) in FIG. 1D shows a PDCP data PDU format of a signaling radio bearer (signaling radio bearer, SRB), (b) in FIG. 1D shows a PDCP data PDU format of a 12-bit PDCP SN, and (c) in FIG. 1D shows a PDCP data PDU format of a data radio bearer (data radio bearer, DRB) with an 18-bit PDCP SN.

For a transmit end, for data (for example, a PDCP SDU) received from an SDAP layer or an RRC layer, a PDCP layer may perform specific processing (for example, any one or more of header compression, encryption, integrity protection, and PDCP PDU header addition) or may not perform processing to obtain a PDCP PDU.

The PDCP PDU may include at least one of the following information (or a field): an SN, a reserved bit R, a PDU type, data, and a message authentication code for integrity (message authentication code for integrity, MAC-I).

For example, the SN field may be used to indicate information about an SN of a PDCP PDU or a PDCP SDU. For example, a quantity of bits (or a quantity of occupied bits) of the SN field may be 12 bits or 18 bits.

For example, the R field is a reserved bit.

For example, the PDU type field may be used to indicate whether the PDCP PDU is a PDCP data PDU or a PDCP control PDU. For example, the PDU type may be represented by D/C. For example, a quantity of bits (or a quantity of occupied bits) of the PDCP type field may be 1 bit.

For example, the data field may include any one or more of the following: a PDCP service data unit (service data unit, SDU), a compressed PDCP SDU, and an uncompressed PDCP SDU. For example, the data may be represented by Data. For example, the data field may be represented by a Data field. It should be noted that data in the data field may be encrypted, or may not be encrypted. For example, any one or more of the PDCP SDU, the compressed PDCP SDU, and the uncompressed PDCP SDU may include user plane data and/or control plane data. For example, a quantity of bits (or a quantity of occupied bits) of the data field may be variable. For example, the quantity of bits (or the quantity of occupied bits) of the data field may be X bytes, or 8×Y bits, where X and/or Y may be positive integers.

For example, the MAC-I field may be used for integrity protection. For example, a quantity of bits (or a quantity of occupied bits) of the MAC-I field may be 32 bits.

For the PDCP layer, a PDU may be classified into two types: a data PDU (data PDU) and a control PDU (control PDU). The PDCP data PDU may carry control plane data and/or user plane data. The PDCP control PDU mainly carries any one or more of a robust header compression (robust header compression, ROHC) feedback, an Ethernet header compression (Ethernet header compression, EHC) feedback, and a PDCP status report.

### 4. PDCP operations:

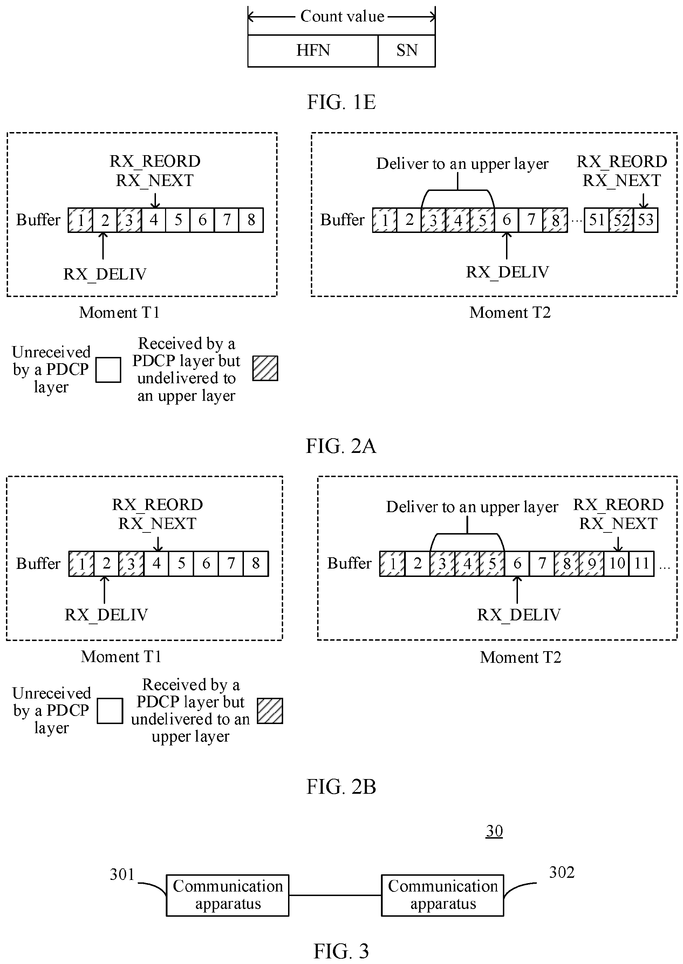

A COUNT may be used for one or more of the following functions: integrity protection and integrity check, encryption and decryption, header compression and decompression, in-order delivery, and repeated discarding. For example, after encrypting a data packet by using COUNT, a transmit end sends the encrypted data packet to a receive end, and the receive end needs to decrypt the data packet based on COUNT. Each PDCP PDU is associated with COUNT, where COUNT is 32 bits. As shown in FIG. 1E, COUNT may include two parts: a hyper frame number (hyper frame number, HFN) of a most significant bit and a PDCP sequence number (sequence number, SN) of a least significant bit. A length of the PDCP SN is configured by an upper layer (for example, an RRC layer) or a network device, and a length of the HFN changes with the length of the PDCP SN. For example, the length of the PDCP SN may be 12 bits or 18 bits. Correspondingly, the length of the HFN may be (32-PDCP SN size) bits, where the PDCP SN size is a quantity of bits corresponding to the length of the PDCP SN. For example, if the PDCP SN size is 12 bits, the length of the HFN is (32-12) bits, that is, 20 bits.

To avoid air interface overheads, the PDCP PDU does not include a complete COUNT, and includes only a least significant bit (that is, an SN) of COUNT.

### 4.1. Operations performed after a PDCP data PDU is received:

After receiving a PDCP data PDU, the receive end (for example, a receiving PDCP entity) needs to calculate an HFN to obtain COUNT. For example, a method for calculating the HFN by the receive end may be as follows:

| |
|---|
| if a PDCP SN of the PDCP data PDU<(an SN part of RX_DELIV-a reordering window size), the PDCP HFN of the PDCP data PDU=an HFN part of RX_DELIV+1; |
| otherwise, if the PDCP SN of the PDCP data PDU>=(the SN part of RX_DELIV+the reordering window size), the PDCP HFN of the PDCP data PDU=the HFN part of RX_DELIV-1; or |
| otherwise, the PDCP HFN of the PDCP data PDU=the HFN part of RX_DELIV. |

The reordering window size is equal to 2^{(X-1)}, where X represents a quantity of bits corresponding to an SN length. For example, RX_DELIV indicates COUNT of a first PDCP SDU that is undelivered to an upper layer but is still waiting. For example, an initial value of RX_DELIV is 0. In addition, ">=" represents "greater than or equal to".

The receive end (for example, the receiving PDCP entity) determines COUNT of the PDCP data PDU based on the PDCP HFN of the PDCP data PDU and the PDCP SN of the PDCP data PDU that are obtained through calculation, where COUNT may be referred to as RCVD_COUNT.

For example, after determining COUNT of the PDCP data PDU, the receive end (for example, the receiving PDCP entity) may perform one or more of the following:
(1) performing decryption and integrity verification on the PDCP data PDU by using COUNT=RCVD_COUNT; and if the integrity verification fails, indicating an integrity verification failure to the upper layer (such as an RRC layer), and/or discarding the PDCP data PDU; and
(2) if RCVD_COUNT<RX_DELIV, or if a PDCP data PDU with COUNT=RCVD_COUNT has been received before, discarding the PDCP data PDU.

If the received PDCP data PDU with COUNT value=RCVD_COUNT is not discarded based on the above determination, the receive end (such as the receiving PDCP entity) may perform one or more of the following:
(1) storing the resulting PDCP SDU in a reception buffer;
(2) if RCVD_COUNT>=RX_NEXT, updating RX_NEXT to RCVD_COUNT+1, where RX_NEXT indicates COUNT of a next PDCP SDU that the upper layer expects to receive, and an initial value of RX_NEXT is 0;
(3) if RCVD_COUNT=RX_DELIV, delivering all stored PDCP SDUs with consecutive associated COUNT values starting from COUNT=RX_DELIV to the upper layer in ascending order of COUNT values (optionally, delivering the PDCP SDUs after header decompression if decompression is not performed before); and/or updating RX_DELIV to COUNT value of the first PDCP SDU that has not been delivered to the upper layer, where COUNT value of the first PDCP SDU>RX_DELIV;
(4) if a t-Reordering timer is running and RX_DELIV>=RX_REORD, stopping and resetting t-Reordering, where RX_REORD indicates COUNT value after COUNT value associated with a PDCP data PDU that triggers the t-Reordering timer; and
(5) if the t-Reordering timer is not running (including a case in which the t-Reordering timer is stopped due to the foregoing operation), and RX_DELIV<RX_NEXT, starting the t-Reordering timer.

Optionally, duration of the t-Reordering timer is configured by the RRC layer or a network device. The t-Reordering timer is used to detect a loss of a PDCP PDU. If the t-Reordering timer is running, another t-Reordering timer should not be started, that is, each receiving PDCP entity cannot simultaneously start a plurality of t-Reordering timers.

### 4.2. Operations performed when the t-Reordering timer expires:

If the t-Reordering timer expires, the receive end (for example, the receiving PDCP entity) may perform one or more of the following:
(1) if header decompression is not performed before, after header decompression is performed, delivering the following PDCP SDUs to the upper layer in ascending order of COUNTs of the PDCP SDUs in a buffer: all stored PDCP SDUs with associated COUNTs<RX_REORD, and/or all stored PDCP SDUs with consecutive associated COUNTs starting from RX_REORD;
(2) updating RX_DELIV to COUNT of the first PDCP SDU that has not been delivered to the upper layer, where COUNT of the first PDCP SDU>=RX_REORD; and
(3) if RX_DELIV<RX_NEXT, updating RX_REORD to RX_NEXT, and starting the t-Reordering timer.

The following uses FIG. 2A as an example to describe content related to the t-Reordering timer.

As shown in FIG. 2A, at a moment T1, RX_DELIV<RX_NEXT, a PDCP layer updates RX_REORD to RX_NEXT, and starts the t-Reordering timer. At a moment T2, when the t-Reordering timer expires, the PDCP layer sequentially delivers PDCP SDUs whose COUNTs are 3, 4, and 5 to the upper layer, and updates RX_DELIV to COUNT, that is, 6, of the first PDCP SDU that has not been delivered to the upper layer and whose COUNT value is greater than RX_REORD (that is, 4). At the moment T2, RX_NEXT is 53, RX_DELIV is still less than RX_NEXT, and the PDCP layer updates RX_REORD to RX_NEXT, and starts the t-Reordering timer.

It should be noted that for PDCP-related content, refer to 3GPP TS 38.323: "NR; Packet Data Convergence Protocol (PDCP) protocol specification". Details are not described herein.

From a perspective of the transmit end, if a piece of data or a group of data is not completely transmitted or is not transmitted after a delay requirement of the data is reached, the transmit end may discard the data, that is, the transmit end does not continue to send the data. In this case, if the PDCP layer of the receive end is still waiting for the data, a delay in delivering data by the PDCP layer is relatively large. For example, the delay requirement may consider any one or more of the following: a packet delay budget (packet delay budget, PDB), a PDU set delay budget (PDU set delay budget, PSDB), a timer related to data discarding, and the like. An example in which the transmit end sends a group of data and a delay requirement of the group of data is 10 milliseconds (ms) is used below for description.

As shown in FIG. 2B, at a moment T1, RX_DELIV<RX_NEXT, the PDCP layer updates RX_REORD to RX_NEXT, and starts the t-Reordering timer. At a moment T2, when the t-Reordering timer expires, the PDCP layer sequentially delivers PDCP SDUs whose COUNTs are 3, 4, and 5 to the upper layer, and updates RX_DELIV to COUNT, that is, 6, of the first PDCP SDU that has not been delivered to the upper layer and whose COUNT value is greater than RX_REORD (that is, 4). At the moment T2, RX_NEXT is 10, RX_DELIV is still less than RX_NEXT, and the PDCP layer updates RX_REORD to RX_NEXT, and starts the t-Reordering timer. If duration of the t-Reordering timer is equal to or slightly less than the delay requirement of the group of data, for example, the duration of the t-Reordering timer is 10 ms, before the PDCP layer obtains PDCP SDUs whose COUNTs are 6 and 7, duration for sending the group of data by the transmit end is greater than the delay requirement of the group of data. In this case, the transmit end stops sending the data, and the PDCP layer starts the t-Reordering timer to wait for receiving the PDCP SDUs whose COUNTs are 6 and 7. Consequently, PDCP SDUs whose COUNTs are 8 and 9 cannot be delivered to the upper layer in time, and may be delivered to the upper layer only after the delay requirement of the group of data is exceeded. A delay in delivering data by the PDCP layer is relatively large, affecting decoding at the receive end. If the duration of the t-Reordering timer is less than the delay requirement of the group of data, for example, the duration of the t-Reordering timer is 5 ms, after the PDCP layer starts the t-Reordering timer a plurality of times (for example, three times) in a process of receiving the group of data, a problem that a delay in delivering data by the PDCP layer is relatively large also occurs.

To resolve the foregoing problem, embodiments of this application provide the following two methods:
Method 1: First data in a first data set is obtained, a first timer is started, and one or more of the following operations are performed when the first timer expires:
updating a first state variable to a first count value;
delivering at least one piece of received data whose count value is greater than a largest count value;
discarding the first data set, or delivering the first data set; or
discarding data whose count value is less than a smallest count value, or delivering the data whose count value is less than the smallest count value.

The first count value is greater than the largest count value, data corresponding to the first count value is not received, and the first state variable indicates a count value of a first piece of data to be delivered; a count value of the at least one piece of data is consecutive, and the at least one piece of data includes data whose count value is the largest count value+1; the smallest count value is a count value of data with a smallest count value in the first data set, or the smallest count value is a count value of data with a smallest count value in received data in the first data set; and the largest count value is a count value of data with a largest count value in a second data set, or the largest count value is a count value of data with a largest count value in received data in the second data set.

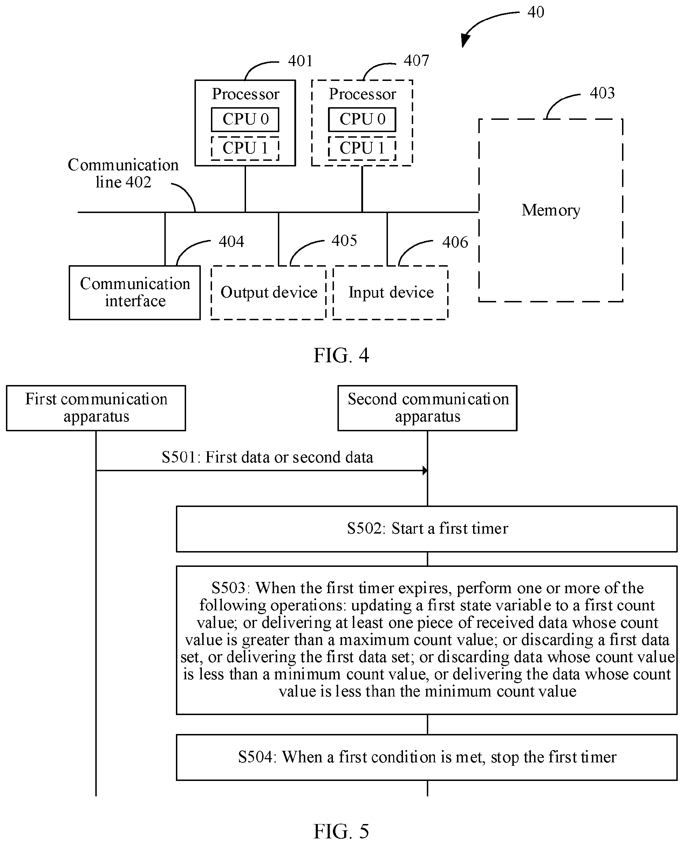

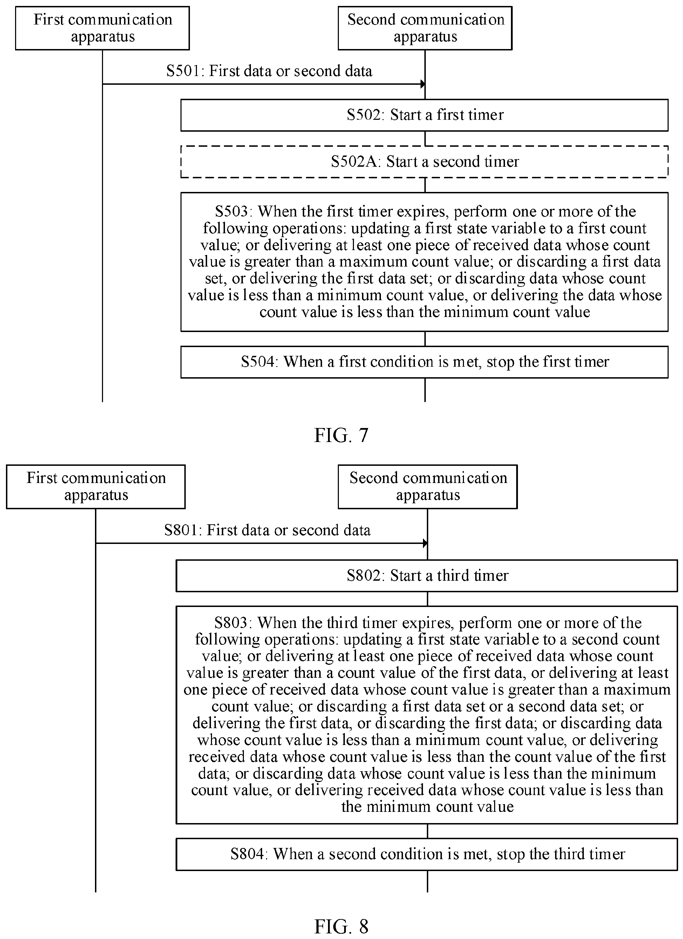

According to Method 1, when the first timer expires, a receive end may discard or deliver data in time, and/or update the first state variable in time, instead of continuing to wait for receiving data that may be unable to be received, data that is no longer sent, or invalid data. This reduces a delay in delivering data by a second communication apparatus, so that the second communication apparatus can perform decoding as soon as possible, thereby improving communication quality and efficiency. A specific process of Method 1 is described in the following method shown in FIG. 5 or FIG. 7, and details are not described herein again.

Method 2: First data is obtained, a third timer is started, and one or more of the following operations are performed when the third timer expires:
updating a first state variable to a second count value;
delivering at least one piece of received data whose count value is greater than a count value of the first data;
discarding the first data set, or delivering the first data; or
discarding data whose count value is less than the count value of the first data, or delivering received data whose count value is less than the count value of the first data.

The second count value is greater than the count value of the first data, data corresponding to the second count value is not received, and the first state variable indicates a count value of a first piece of data to be delivered; a count value of the at least one piece of data is consecutive, and the at least one piece of data includes data whose count value is a largest count value+1, or the at least one piece of data includes data whose count value is the count value of the first data+1; the largest count value is a count value of data with a largest count value in the first data set, or the largest count value is a count value of data with a largest count value in received data in the first data set; and the smallest count value is a count value of data with a smallest count value in the first data set, or the smallest count value is a count value of data with a smallest count value in received data in the first data set.

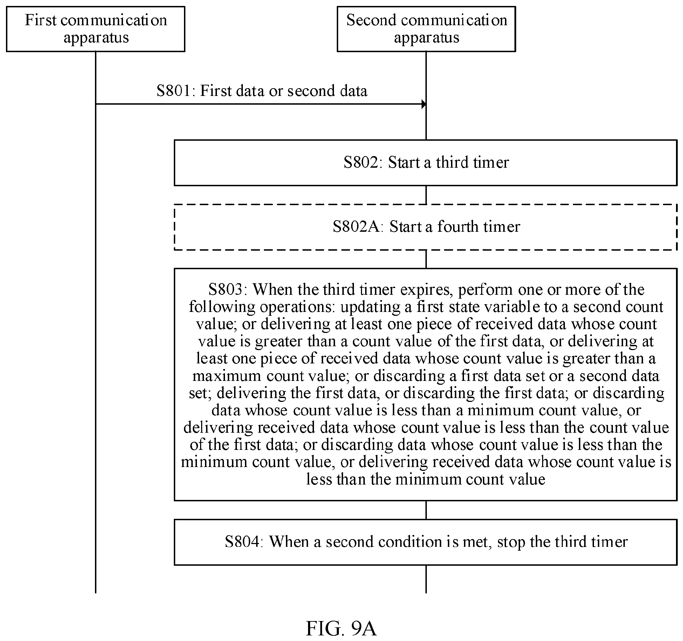

According to Method 2, when the third timer expires, a receive end may discard, in time, data that may be unable to be received, or deliver received data in time, and/or update the first state variable in time, instead of continuing to wait for receiving data that may be unable to be received, data that is no longer sent, or invalid data. This reduces a delay in delivering data by a second communication apparatus, so that the second communication apparatus can perform decoding as soon as possible. A specific process of Method 2 is described in the following method shown in FIG. 8 or FIG. 9A, and details are not described herein again.

It may be understood that the method provided in embodiments of this application may be performed by any layer of a receive end. Embodiments of this application is described by using an example in which a PDCP layer of the receive end performs the method. A unified description is provided herein, and details are not described below.

The following clearly and completely describes the technical solutions in embodiments of this application with reference to the accompanying drawings in embodiments of this application. Clearly, the described embodiments are merely some rather than all of embodiments of this application.

The method provided in embodiments of this application may be used in various communication systems. For example, the communication system may be an LTE system, a 5th generation (5th generation, 5G) communication system, a Wi-Fi system, a 3rd generation partnership project (3rd generation partnership project, 3GPP)-related communication system, a future evolved communication system (for example, a 6th generation (6th generation, 6G) communication system), a system integrating a plurality of systems, or the like. This is not limited. 5G may also be referred to as NR. The following uses a communication system 30 shown in FIG. 3 as an example to describe the method provided in embodiments of this application. FIG. 3 is only a schematic diagram, and does not constitute a limitation on an applicable scenario of the technical solutions provided in this application.

FIG. 3 is a diagram of an architecture of a communication system 30 according to an embodiment of this application. In FIG. 3, the communication system 30 may include a communication apparatus 301 and a communication apparatus 302 that can communicate with the communication apparatus 301.

The communication apparatus 301 or the communication apparatus 302 may be any device having a wireless transceiver function, for example, may be a network device or a terminal.

The network device in this embodiment of this application includes but is not limited to: an evolved NodeB (NodeB or eNB or e-NodeB, evolutional NodeB) in LTE, a gNodeB (gNodeB or gNB) or a transmission reception point (transmission receiving point/transmission reception point, TRP) in NR, a base station that subsequently evolves in 3GPP, an access node in a Wi-Fi system, a wireless relay node, a wireless backhaul node, or the like. The base station may be a macro base station, a micro base station, a picocell base station, a small cell, a relay station, a balloon station, or the like. A plurality of base stations may support networks using a same technology mentioned above, or may support networks using different technologies mentioned above. The base station may include one or more co-site or non-co-site TRPs. The network device may alternatively be a radio controller in a cloud radio access network (cloud radio access network, CRAN) scenario. Alternatively, the network device may be a central unit (central unit, CU) and/or a distributed unit (distributed unit, DU). The network device may alternatively be a server, a wearable device, a machine communication device, a vehicle-mounted device, or the like. An example in which the network device is a base station is used below for description. The plurality of network devices may be base stations of a same type, or may be base stations of different types. The base station may communicate with a terminal, or may communicate with the terminal through a relay station. The terminal may communicate with a plurality of base stations using different technologies. For example, the terminal may communicate with a base station supporting an LTE network, may communicate with a base station supporting a 5G network, or may support a dual connection to a base station in an LTE network and a base station in a 5G network.

The terminal in this embodiment of this application may be deployed on land, including deployed indoors or outdoors, held in hand, or deployed in vehicle, may be deployed on water (for example, on a ship), or may be deployed in air (for example, on an air plane, a balloon, or a satellite). The terminal may also be referred to as a terminal device. The terminal device may be user equipment (user equipment, UE). The UE includes a handheld device, a vehicle-mounted device, a wearable device, or a computing device that has a wireless communication function. For example, the UE may be a mobile phone (mobile phone), a tablet computer, or a computer with a wireless transceiver function. Alternatively, the terminal device may be a wireless terminal in industrial control, a wireless terminal in self-driving, a wireless terminal in remote medical, a wireless terminal in a smart grid, a wireless terminal in a smart city (smart city), a wireless terminal in a smart home (smart home), or the like.

By way of example but not limitation, the terminal in this application may be a wearable device. The wearable device may also be referred to as a wearable intelligent device, and is a general term of wearable devices that are intelligently designed and developed for daily wear by using a wearable technology, for example, glasses, gloves, a watch, clothing, and shoes. The wearable device is a portable device that can be directly worn on the body or integrated into clothes or accessories of a user. For example, the wearable device is not only a hardware device, but also a device that implements a powerful function through software support, data exchange, and cloud interaction. In a broad sense, intelligent wearable devices include full-featured and large-sized devices that can implement complete or partial functions without depending on smartphones, for example, smart watches or smart glasses, and include devices that are dedicated to only one type of application function and that need to be used in cooperation with other devices such as the smartphones, for example, various smart bands or smart jewelry used for monitoring physical signs.

In this application, the terminal may be a terminal in an Internet of Things (Internet of Things, IoT) system. An IoT is an important component in development of future information technologies. A main technical feature of the IoT is to connect an object to a network by using a communication technology, to implement an intelligent network of human-computer interconnection and thing-thing interconnection. The terminal in this application may be a terminal in machine type communication (machine type communication, MTC). The terminal in this application may be a vehicle-mounted module, a vehicle-mounted component, an onboard component, a vehicle-mounted chip, or a vehicle-mounted unit that is built in a vehicle as one or more components or units. The vehicle uses the vehicle-mounted module, the vehicle-mounted component, the onboard component, the vehicle-mounted chip, or the vehicle-mounted unit that is built in the vehicle, to implement the method in this application.

Optionally, the method provided in embodiments of this application may be applied to a multimedia service that has a high real-time performance requirement and a large data capacity requirement, for example, a video transmission service, a cloud gaming (cloud gaming, CG) service, and an XR service. XR includes virtual reality, VR, and AR. Therefore, the terminal in this embodiment of this application may alternatively be a head mounted display (head mounted display, HMD), smart glasses (such as VR glasses and AR glasses), or the like. This is not limited.

The communication system 30 shown in FIG. 3 is only used as an example, but is not intended to limit the technical solutions in this application. A person skilled in the art should understand that, in a specific implementation process, the communication system 30 may further include another device, and a quantity of communication apparatuses may be determined based on a specific requirement. This is not limited.

Optionally, each apparatus (for example, the communication apparatus 301 or the communication apparatus 302) in FIG. 3 in embodiments of this application may be a general-purpose device or a dedicated device. This is not specifically limited in embodiments of this application.

Optionally, a related function of each apparatus (for example, the communication apparatus 301 or the communication apparatus 302) in FIG. 3 in embodiments of this application may be implemented by one device, may be jointly implemented by a plurality of devices, or may be implemented by one or more functional modules in one device. This is not specifically limited in embodiments of this application. It may be understood that, the foregoing function may be a network element in a hardware device, or may be a software function running on dedicated hardware, or a combination of hardware and software, or a virtualization function instantiated on a platform (for example, a cloud platform).

During specific implementation, each apparatus (for example, the communication apparatus 301 or the communication apparatus 302) in FIG. 3 in embodiments of this application may use a composition structure shown in FIG. 4, or include components shown in FIG. 4. FIG. 4 is a diagram of a hardware structure of a communication apparatus applicable to an embodiment of this application. The communication apparatus 40 includes at least one processor 401 and at least one communication interface 404, and is configured to implement the method provided in embodiments of this application. The communication apparatus 40 may further include a communication line 402 and a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a path, such as a bus, for transferring information between the components described above.

The communication interface 404 is configured to communicate with another device or a communication network. The communication interface 404 may be any apparatus such as a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 403 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, this is not limited thereto. The memory may exist independently, and is coupled to the processor 401 through the communication line 402. Alternatively, the memory 403 may be integrated with the processor 401. The memory provided in this embodiment of this application may be usually non-volatile.

The memory 403 is configured to store computer-executable instructions for performing the solutions provided in embodiments of this application, and the processor 401 controls the execution. The processor 401 is configured to execute the computer-executable instructions stored in the memory 403, to implement the method provided in embodiments of this application. Alternatively, optionally, in this embodiment of this application, the processor 401 may perform functions related to processing in the method provided in the following embodiments in this application, and the communication interface 404 is responsible for communication with another device or a communication network. This is not specifically limited in this embodiment of this application.

Optionally, the computer-executable instructions in this embodiment of this application may also be referred to as application program code. This is not specifically limited in this embodiment of this application.

The coupling in this embodiment of this application may be an indirect coupling or a communication connection between apparatuses, units, or modules in an electrical form, a mechanical form, or another form, and is used for information exchange between the apparatuses, the units, or the modules.

In an embodiment, the processor 401 may include one or more CPUs, for example, a CPU 0 and a CPU 1 in FIG. 4.

In an embodiment, the communication apparatus 40 may include a plurality of processors, for example, the processor 401 and a processor 407 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 40 may further include an output device 405 and/or an input device 406. The output device 405 is coupled to the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 is coupled to the processor 401, and may receive a user input in a plurality of manners. For example, the input device 406 may be a mouse, a keyboard, a touchscreen device, or a sensor device.

It may be understood that, the composition structure shown in FIG. 4 does not constitute a limitation on the communication apparatus. In addition to the components shown in FIG. 4, the communication apparatus may include more or fewer components than those shown in the figure, or combine some components, or have different component arrangements.

The following describes, with reference to the accompanying drawings, the method provided in embodiments of this application. Network elements in the following embodiments may have components shown in FIG. 4. Details are not described again.

For ease of understanding of embodiments of this application, the following descriptions are provided.

It may be understood that, in embodiments of this application, "/" may represent an "or" relationship between associated objects. For example, A/B may represent A or B. "And/or" may be used to describe that three relationships exist between the associated objects. For example, "A and/or B" may represent the following three cases: Only A exists, both A and B exist, and only B exists, where A and B may be singular or plural. In addition, an expression similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the expression, a meaning of the expression may be obtained according to the foregoing rules. "At least one of the following items" or a similar expression indicates any combination of the items, including one of the items or any combination of a plurality of items. For example, at least one of a, b, or c may indicate: a, b, c, "a and b", "a and c", "b and c", or "a, b, and c", where a, b, and c may be singular or plural.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

For ease of describing the technical solutions in embodiments of this application, in embodiments of this application, terms such as "first" and "second" may be used to distinguish between technical features with a same function or similar functions. The words such as "first" and "second" do not limit a quantity and an execution sequence, and the words such as "first" and "second" do not limit a definite difference. In embodiments of this application, the word such as "example" or "for example" is used to represent an example, an illustration, or a description. Any embodiment or design solution described as "example" or "for example" should not be explained as being more preferred or having more advantages than another embodiment or design solution. A word such as "example" or "for example" is used to present a related concept in a specific manner for ease of understanding.

In embodiments of this application, the word "example" or "for example" is used to represent giving an example, an illustration, or a description. In embodiments of this application, any embodiment or design solution described as "example" or "for example" should not be explained as being more preferred or having more advantages than another embodiment or design solution. Exactly, use of the terms such as "example" or "for example" is intended to present a related concept in a specific manner for ease of understanding.

It may be understood that, "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that, sequence numbers of processes do not mean execution sequences in various embodiments of this application. The execution sequences of the processes should be determined based on functions and internal logic of the processes, and should not be construed as any limitation on implementation processes of embodiments of this application.

It may be understood that, in this application, "when ...", "if", or a similar expression means that corresponding processing is performed in an objective situation, is not intended to limit time, does not require a necessary determining action during implementation, and does not mean any other limitation.

"Simultaneously" in this application may be understood as being at a same time point, may be understood as being within a time period, or may be understood as being within a same periodicity.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, the apparatus provided in embodiments of this application may also correspondingly implement these features or functions. Details are not described herein.

It may be understood that, a same step or steps or technical features that have a same function in embodiments of this application may be mutually referenced in different embodiments.

It may be understood that in embodiments of this application, a first communication apparatus and/or a second communication apparatus may perform some or all of steps in embodiments of this application. These steps are merely examples. In embodiments of this application, other steps or variations of various steps may be further performed. In addition, the steps may be performed in a sequence different from that presented in embodiments of this application, and it is possible that not all the steps in embodiments of this application need to be performed.

It should be noted that in this application, the second communication apparatus may include/be replaced with a PDCP layer of the second communication apparatus or a PDCP entity of the second communication apparatus. The PDCP layer of the second communication apparatus may include/be replaced with the PDCP entity of the second communication apparatus.

It should be noted that in this application, receiving may include/be replaced with obtaining. Obtaining may include/be replaced with receiving. Received may include/be replaced with obtained. Obtained may include/be replaced with received.

It should be noted that in this application, data in a first data set may include/be replaced with data belonging to the first data set.

It should be noted that in this application, delivery may include/be replaced with delivery to an upper layer (for example, an SDAP layer or an RRC layer).

It should be noted that in this application, a reception buffer may include/be replaced with a buffer.

It should be noted that in this application, "to which belongs" may include/be replaced with "to which is located" or "to which is associated".

It should be noted that in this application, starting includes starting or restarting.

FIG. 5 shows a data transmission method according to an embodiment of this application. The method may include the following steps.

S501: A first communication apparatus sends first data to a second communication apparatus, and correspondingly, the second communication apparatus receives the first data from the first communication apparatus. Alternatively, the first communication apparatus sends second data to the second communication apparatus, and correspondingly, the second communication apparatus receives the second data from the first communication apparatus.

For example, the first communication apparatus may be one of the communication apparatuses in the communication system 30 shown in FIG. 3, and the second communication apparatus may be the other communication apparatus in the communication system 30 shown in FIG. 3. For example, the first communication apparatus is the communication apparatus 301 in FIG. 3, and the second communication apparatus is the communication apparatus 302 in FIG. 3.

For example, that the second communication apparatus receives the first data from the first communication apparatus may include: The second communication apparatus obtains the first data.

For example, that the second communication apparatus obtains the first data may include any one or more of the following: a PDCP layer of the second communication apparatus obtains the first data, the PDCP layer of the second communication apparatus receives/obtains the first data from a lower layer (for example, an RLC layer), the second communication apparatus or the PDCP layer of the second communication apparatus does not discard the first data, or the second communication apparatus or the PDCP layer of the second communication apparatus stores the first data in a reception buffer.

Optionally, that the second communication apparatus or the PDCP layer of the second communication apparatus does not discard the first data may include any one or more of the following: integrity check of the first data succeeds, a count value of the first data is greater than or equal to a first state variable, and the second communication apparatus or the PDCP layer of the second communication apparatus has not previously received data corresponding to the count value of the first data.

Optionally, the first data is associated with a first data set, the first data belongs to the first data set, or the first data set includes the first data.

Optionally, the first data set includes a data burst (data burst) or a PDU set (PDU set). Optionally, the first data set is a data burst or a PDU set. For example, the first data set is a data burst to which the first data belongs, or the first data set is a PDU set to which the first data belongs.

Optionally, the data burst to which the first data belongs may be replaced with a data burst associated with the first data, and the PDU set to which the first data belongs may be replaced with a PDU set associated with the first data.

Optionally, if receiving deadlines of different PDU sets or different data (for example, PDUs or PDCP PDUs) in a data burst are the same or similar, the first data set may be a data burst. Optionally, if receiving deadlines of different PDU sets in a data burst are different or have a relatively large difference, the first data set may be a PDU set.

Optionally, the first data meets any one or more of the following: (1) The first data is a first piece of obtained data in the first data set; (2) the first data is a first piece of data that is in the first data set and that is stored in the reception buffer of the second communication apparatus or the PDCP layer of the second communication apparatus; (3) the second communication apparatus does not discard the first data; (4) integrity check of the first data succeeds; (5) the count value of the first data is greater than or equal to the first state variable; (6) the second communication apparatus has not previously received data in the first data set; (7) the second communication apparatus has not previously received data corresponding to the count value of the first data; and (8) the first data is stored in the reception buffer of the second communication apparatus or the PDCP layer of the second communication apparatus.

For example, the count value of the first data is COUNT of the first data.

For example, the first state variable may be used to indicate a count value of a first piece of data to be delivered, or the first state variable may be used to indicate a count value of a first piece of undelivered data to be delivered. For example, the first state variable may include RX_DELIV. For example, the first state variable is RX_DELIV For example, RX_DELIV may indicate COUNT of a next PDCP PDU that is not delivered to an upper layer and that is waiting. For example, RX_DELIV may be understood as a lower limit of a reordering window. Optionally, that the first data is a first piece of obtained data in the first data set may include/be replaced with the following: The first data is a first piece of data that is in the first data set and that is received by the second communication apparatus, or the first data is first piece of data that is in the first data set and that is obtained.

Optionally, that the first data is a first piece of data that is in the first data set and that is stored in the reception buffer of the second communication apparatus or the PDCP layer of the second communication apparatus may include/be replaced with the following: The first data is a first piece of data that is in the first data set and that is stored in the reception buffer of the second communication apparatus or the PDCP layer of the second communication apparatus, or first piece of data that is in the first data set and that is stored in the reception buffer of the second communication apparatus or the PDCP layer of the second communication apparatus.

For example, the first data is a first piece of data, in the first data set, that is received by the second communication apparatus and that is not discarded.

For example, the first data is a first piece of data, in the first data set, that is received by the second communication apparatus (or the PDCP layer of the second communication apparatus) and that is stored in the reception buffer.

It should be noted that, the first piece of data that is in the first data set and that is received by the second communication apparatus is described from a perspective of receiving by a receive end. This does not mean that the first data is a first piece of data in the first data set, but is a first piece of data that is in the first data set and that is actually received by the second communication apparatus. For example, the first data set includes data whose COUNT values are 0 to 100, and the first piece of data that is in the first data set and that is received by the second communication apparatus is data whose COUNT value is 50. In this case, the data whose COUNT value is 50 is the first data.

It should be noted that, content related to "the second communication apparatus receives the second data from the first communication apparatus" or "the second data" is similar to content related to "the second communication apparatus receives the first data from the first communication apparatus" or "the first data". The first data may be replaced with the second data, and the first data set may be replaced with a fourth data set for understanding. Details are not described herein.

For example, the fourth data set is different from the first data set. For example, a count value of data with a smallest count value in the fourth data set is greater than a count value of data with a largest count value in the first data set, or the fourth data set is after or located after the first data set.

Optionally, the fourth data set includes a data burst (data burst) or a PDU set (PDU set). Optionally, the fourth data set is a data burst or a PDU set. For example, the fourth data set is a data burst to which the second data belongs, or the fourth data set is a PDU set to which the second data belongs.

S502: The second communication apparatus starts a first timer.

Optionally, the first timer is associated with the first data set, or the first timer is a timer corresponding to the first data set. Optionally, in the method shown in FIG. 5, the second communication apparatus may start the timer by using a data set (for example, a data burst or a PDU set) as a granularity. Optionally, in the method shown in FIG. 5, the timer is per data set (for example, a data burst or a PDU set).

In a possible implementation, the PDCP layer of the second communication apparatus starts the first timer.

Optionally, duration of the first timer may be configured by a network device, may be preconfigured, may be stored by the second communication apparatus, or may be obtained in another manner. This is not limited in this application.

Optionally, if the second communication apparatus receives the second data from the first communication apparatus, this application further includes the following: The second communication apparatus starts a fifth timer.

Optionally, the fifth timer is associated with the fourth data set, or the fifth timer is a timer corresponding to the fourth data set.

For example, the fifth timer and the first timer have a same type/granularity, but are associated with different data sets.

Optionally, duration of the fifth timer may be the same as or different from the duration of the first timer. This is not limited.

Optionally, if the first data set and the fourth data set belong to a same data burst, the duration of the fifth timer may be the same as the duration of the first timer.

Optionally, if the first data set and the fourth data set belong to different data bursts, the duration of the fifth timer may be different from the duration of the first timer.

In a possible design, the duration of the first timer is less than the duration of the fifth timer.

For example, the duration of the first timer may be equal to the duration of the fifth timer minus first duration. Optionally, the duration of the first timer or the first duration is related to a service periodicity (for example, a periodicity of an XR service). For example, the duration of the first timer may be the duration of the fifth timer minus the service periodicity. Optionally, the first duration may be configured by a network device, may be preconfigured, may be stored by the second communication apparatus, or may be obtained in another manner. This is not limited in this application. For example, the first duration is equal to the service periodicity.

In a possible implementation, when the data in the first data set is not obtained, the second communication apparatus receives the second data from the first communication apparatus, and the second communication apparatus starts the first timer. For example, when the second communication apparatus receives the second data but has not received the data in the first data set, the second communication apparatus starts the first timer.

It may be understood that, from a perspective of the first communication device, the first data set or the first data is sent before the second data. If the second communication device first receives the second data, and the second communication device does not start the first timer, but starts the first timer after the second communication device receives the first data, expired time of the first timer is later than expired time of the fifth timer, and the second terminal device does not perform data discarding/delivery/state variable update in time based on expiration of the first timer, which causes an extra data delivery delay and affects communication efficiency and quality. The method in which the second communication apparatus receives the second data from the first communication apparatus and starts the first timer can resolve this problem, and can ensure timely data delivery, thereby facilitating decoding by the second communication apparatus and improving communication quality and efficiency.

S503: When the first timer expires, the second communication apparatus performs any one or more of an operation 1, an operation 2, an operation 3, or an operation 4.

The following describes each operation in detail:
Operation 1: Update the first state variable to a first count value.

Optionally, the first count value is greater than a largest count value.

Optionally, data corresponding to the first count value is not received by the second communication apparatus. Optionally, the first count value is equal to the largest count value+1.

For example, that data corresponding to the first count value is not received by the second communication apparatus may include/be replaced with any one or more of the following: The data corresponding to the first count value has not been delivered to an upper layer (for example, an SDAP layer or an RRC layer), and the data corresponding to the first count value does not exist/is not stored in the reception buffer of the second communication apparatus or the PDCP layer of the second communication apparatus.

For example, the data corresponding to the first count value may include/be replaced with a PDCP SDU or a PDCP PDU corresponding to the first count value.

Optionally, the data corresponding to the first count value is a first piece of unreceived data whose count value is greater than the largest count value.

For example, the first piece of unreceived data whose count value is greater than the largest count value may include/be replaced with any one or more of the following: a first piece of data that has not been delivered to an upper layer (for example, an SDAP layer or an RRC layer) and whose count value is greater than the largest count value, and a first piece of data that does not exist/is not stored in the reception buffer of the second communication apparatus or the PDCP layer of the second communication apparatus and whose count value is greater than the largest count value.

For example, the largest count value is a count value of data with a largest count value in a second data set, or the largest count value is a count value of data with a largest count value in received data in the second data set.

For example, that the largest count value is a count value of data with a largest count value in received data in the second data set may include/be replaced with the following: The largest count value is a count value of data with a largest count value in received but undelivered data in the second data set, and the largest count value is a count value of data with a largest count value that is in the second data set and that exists/is stored in the reception buffer of the second communication apparatus or the PDCP layer of the second communication apparatus.

For example, the second communication apparatus updates the first state variable to COUNT of a first piece of data (for example, a PDCP SDU) that has not been delivered to an upper layer (for example, an SDAP layer or an RRC layer). COUNT of the first piece of data is greater than the largest count value. For example, the second communication apparatus updates the first state variable to a first gap after the second data set. For example, the second communication apparatus updates the first state variable to COUNT after a last piece of received data in the second data set. For example, the second communication apparatus updates the first state variable to COUNT of the last piece of received data in the second data set+1.

For example, if the second communication apparatus knows a count value of data with a largest count value in the second data set, the largest count value is the count value of the data with the largest count value in the second data set. For example, if the second communication apparatus does not know the count value of the data with the largest count value in the second data set, the largest count value is the count value of the data with the largest count value in the received data in the second data set.

Optionally, data corresponding to the largest count value meets any one or more of the following: (1) The data corresponding to the largest count value is a last piece of data that is in the second data set and that is received by the second communication apparatus; (2) the data corresponding to the largest count value is a last piece of data that is in the second data set and that is stored in the reception buffer of the PDCP layer of the second communication apparatus; (3) the second communication apparatus does not discard the data corresponding to the largest count value; (4) integrity check of the data corresponding to the largest count value succeeds; (5) the largest count value is greater than or equal to the first state variable or the first state variable before update; (6) the second communication apparatus has not previously received the data corresponding to a largest count value; and (7) the second communication apparatus has not previously received the data corresponding to the largest count value.

For example, the last piece of data that is in the second data set and that is received by the second communication apparatus may include/be replaced with a last piece of data that is in the second data set and that is received by the second communication apparatus.

It should be noted that, in this embodiment of this application, that the data corresponding to the largest count value is the last piece of data that is in the second data set and that is received by the second communication apparatus is described from a perspective of a receive end. This does not mean that the data corresponding to the largest count value is a last piece of data in the second data set, but a last piece of data that is in the second data set and that is actually received by the second communication apparatus.

Optionally, the first data set includes some or all data in the second data set. For example, the second data set includes the first data set. For example, the second data set is the first data set, or the second data set is the same as the first data set. Alternatively, for example, the second data set is different from the first data set. For example, the second data set includes the first data set and data associated with the first data set.

For example, the second data set is a data burst to which the first data belongs; or the second data set includes a data burst to which the first data belongs and a data burst associated with the data burst; or the second data set is a PDU set to which the first data belongs; or the second data set includes a PDU set to which the first data belongs and a PDU set associated with the PDU set; or the second data set includes a PDU set to which the first data belongs and a data burst to which the PDU set belongs; or the second data set includes a PDU set to which the first data belongs, a data burst to which the PDU set belongs, and a data burst associated with the data burst; or the second data set includes a PDU set to which the first data belongs and a data burst associated with the PDU set.

For example, the data burst associated with the data burst to which the first data belongs may be understood as that the associated data burst needs to depend on the data burst to which the first data belongs to perform data processing. For example, the PDU set associated with the PDU set to which the first data belongs may be understood as that the associated PDU set needs to depend on the PDU set to which the first data belongs to perform data processing. For example, the data burst associated with the PDU set may be understood as that the data burst needs to depend on the PDU set to perform data processing. For example, data processing may include data decoding and/or data decryption.

Optionally, that the second communication apparatus updates the first state variable to the first count value may be understood as that the second communication apparatus updates the first state variable to a count value of a first piece of data that has not been delivered to an upper layer, where the count value is greater than the largest count value.

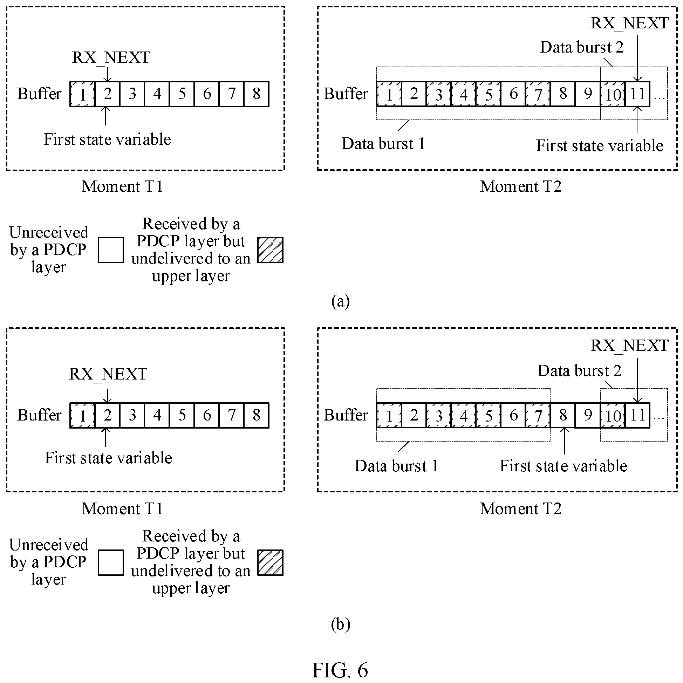

For example, as shown in FIG. 6, at a moment T1, the second communication apparatus obtains the first data whose count value is 1 in a data burst 1, and starts the first timer. At a moment T2, the first timer expires. If the second communication apparatus knows that a count value of data with a largest count value in the data burst 1 is 9, that is, the largest count value is 9, the second communication apparatus updates the first state variable to a first gap or a count value corresponding to the first gap whose count value is greater than the largest count value, that is, 11 (as shown in (a) in FIG. 6). If the second communication apparatus does not know the count value of the data with the largest count value in the data burst 1, but a count value of data with a largest count value in data that is in the data burst 1 and that is received by the second communication apparatus is 7, that is, the largest count value is 7, the second communication apparatus updates the first state variable to the largest count value+1, that is, 8 (as shown in (b) in FIG. 6).

In this embodiment of this application, the gap may include/be understood as any one or more of the following: data that is not received by the second communication apparatus, data that is not stored in the reception buffer of the second communication apparatus or the PDCP layer of the second communication apparatus, COUNT corresponding to the data that is not received by the second communication apparatus, or COUNT corresponding to the data that is not stored in the reception buffer of the second communication apparatus or the PDCP layer of the second communication apparatus.

It may be understood that, through the operation 1, when the first timer expires, the second communication apparatus may update the first state variable to the first count value. In this way, the second communication apparatus may not need to always wait for data (for example, some unreceived data) whose count value is less than the first count value or the largest count value, to avoid a case that the first communication apparatus has stopped sending data (for example, some unreceived data, or some data that is in the first data set or the second data set and that is not received) whose count value is less than the first count value or the largest count value, but the second communication apparatus is still waiting for receiving data (for example, some unreceived data, or some data that is in the first data set or the second data set and that is not received) whose count value is less than the first count value or the largest count value. This can reduce a delay in delivering data (for example, subsequent data) by the second communication apparatus. For example, even if a reordering timer is still running, the second communication apparatus may update the first state variable or push or slide a PDCP window without waiting for the reordering timer to expire. This prevents update of the first state variable or the PDCP window from being meaninglessly suspended by some data (for example, data that is not received by the second communication apparatus but that the first communication apparatus has stopped sending). Therefore, a delay in delivering data (for example, subsequent data) by the second communication apparatus can be reduced, thereby facilitating decoding by the second communication apparatus, and helping improve communication efficiency and quality.

Operation 2: Deliver at least one piece of received data whose count value is greater than the largest count value.

For example, the "at least one piece of received data whose count value is greater than the largest count value" may include any one or more of the following: at least one piece of received but undelivered data whose count value is greater than the largest count value; at least one piece of data that exists/is stored in the reception buffer of the second communication apparatus or the PDCP layer of the second communication apparatus and whose count value is greater than the largest count value; data that is consecutively received/consecutively stored after the second data set, data that is consecutively received/stored in sequence and whose count value is greater than the largest count value; and data that is consecutively received/consecutively stored starting from the largest count value+1.

It should be noted that, "consecutively received data" is not limited to that the second communication apparatus consecutively receives the data in sequence, but is merely intended to indicate that COUNT values of the received data are consecutive. Optionally, the consecutively received data is data with consecutive count values, and does not mean that the second communication apparatus or the PDCP layer of the second communication apparatus receives the data consecutively.

Optionally, a count value of the at least one piece of data is consecutive. For example, the at least one piece of data includes data whose count value is the largest count value+1. For example, the at least one piece of data includes data that is consecutively received/consecutively stored starting from data whose count value is the largest count value+1.

Optionally, the second communication apparatus knows a count value of data with a largest count value in the second data set, and the second communication apparatus performs the operation 2. Alternatively, optionally, the largest count value is a count value of data with a largest count value in the second data set, and the second communication apparatus performs the operation 2.

For example, in the example shown in FIG. 6, at the moment T2, the first timer expires. If the second communication apparatus knows that a count value of data with a largest count value in the data burst 1 is 9, the second communication apparatus delivers data whose count value is 10, that is, the at least one piece of data includes the data whose count value is 10. For example, if the second communication apparatus does not know a count value of data with a largest count value in the data burst 1, the second communication apparatus may not perform the operation 2.

It may be understood that, through the operation 2, when the first timer expires, the second communication apparatus may deliver, in time, data whose count value is greater than the largest count value, to reduce a delay in delivering data by the second communication apparatus, thereby facilitating decoding by the second communication apparatus. In this way, the second communication apparatus may not need to always wait for data (for example, some unreceived data) whose count value is less than the first count value or the largest count value, to avoid a case that the first communication apparatus has stopped sending data (for example, some unreceived data, or some unreceived data in the first data set or the second data set) whose count value is less than the first count value or the largest count value, but the second communication apparatus is still waiting for receiving data (for example, some unreceived data, or some unreceived data in the first data set or the second data set) whose count value is less than the first count value or the largest count value. This can reduce a delay in delivering data (for example, data whose count value is greater than the largest count value or subsequent data) by the second communication apparatus. For example, even if a reordering timer is still running, the second communication apparatus may deliver, to an upper layer, received data whose count value is greater than the largest count value without waiting for the reordering timer to expire. This avoids that delivery of data whose count value is greater than the largest count value is meaninglessly suspended by some data (for example, data that is not received by the second communication apparatus but that the first communication apparatus has stopped sending). Therefore, a delay in delivering data by the second communication apparatus can be reduced, thereby helping improve communication efficiency and quality.

Operation 3: Discard the first data set or the second data set, or deliver the first data set or the second data set.

For example, the discarding the first data set or the second data set may include/be replaced with: discarding received data in the first data set or the second data set.

For example, the delivering the first data set or the second data set may include/be replaced with: delivering received data in the first data set or the second data set.

For example, the received data in the first data set or the second data set may include/be replaced with any one or more of the following: received but undelivered data in the first data set or the second data set, and data that is in the first data set or the second data set and that exists/is stored in the reception buffer of the second communication apparatus or the PDCP layer of the second communication apparatus.

Optionally, if a packet loss rate/a quantity of lost packets/a data amount of lost packets corresponding to the first data set or the second data set is greater than or equal to a first threshold, the second communication apparatus discards the first data set or the second data set.

For example, that a packet loss rate/a quantity of lost packets/a data amount of lost packets corresponding to the first data set or the second data set is greater than or equal to a first threshold may include/be replaced with that a receiving rate/a received quantity/an amount of received data corresponding to the first data set or the second data set is less than or equal to a seventh threshold.

Optionally, the first threshold is associated with the second data set or the first data set. For example, the first threshold is a maximum packet loss rate corresponding to the first data set, or the first threshold is a maximum packet loss rate corresponding to the second data set.

Optionally, if the packet loss rate/the quantity of lost packets/the data amount of lost packets corresponding to the first data set or the second data set is less than or equal to the first threshold, or the packet loss rate/the quantity of lost packets/the data amount of lost packets is not concerned/considered, the second communication apparatus delivers the first data set or the second data set.

For example, that the packet loss rate/the quantity of lost packets/the data amount of lost packets corresponding to the first data set or the second data set is less than or equal to the first threshold may include/be replaced with that the receiving rate/the received quantity/the amount of received data corresponding to the first data set or the second data set is greater than or equal to the seventh threshold.

In the example shown in FIG. 6, at the moment T2, the first timer expires. If a packet loss rate corresponding to the data burst 1 is greater than or equal to the first threshold, the second communication apparatus discards the data burst 1; or if the packet loss rate corresponding to the data burst 1 is less than the first threshold, the second communication apparatus delivers data whose count values are 3, 4, 5, and 7.

It may be understood that, through the operation 3, when the first timer expires, the second communication apparatus may discard the first data set or the second data set in time, or deliver the first data set or the second data set in time, so that time for the second communication apparatus to wait for receiving data can be shortened, thereby reducing a delay in delivering data by the second communication apparatus, and facilitating decoding by the second communication apparatus. In this way, the second communication apparatus may not need to always wait for data (for example, some unreceived data) whose count value is less than the first count value or the largest count value, to avoid a case that the first communication apparatus has stopped sending data (for example, some unreceived data, or some unreceived data in the first data set or the second data set) whose count value is less than the first count value or the largest count value, the second communication apparatus is still waiting for receiving unreceived data (for example, some unreceived data, or some unreceived data in the first data set or the second data set) whose count value is less than the first count value or the largest count value. This can reduce a delay in delivering data (for example, subsequent data) by the second communication apparatus. For example, even if a reordering timer is still running, the second communication apparatus may deliver the received first data set or the received second data set to an upper layer without waiting for the reordering timer to expire. This avoids that delivery of the received data in the first data set or in the second data set is meaninglessly suspended by some data (for example, data that is in the first data set or the second data set and that is not received by the second communication apparatus but that the first communication apparatus has stopped sending). Therefore, a delay in delivering data by the second communication apparatus can be reduced, thereby helping improve communication efficiency and quality. In addition, considering that when a packet loss reaches a specific degree, the second communication apparatus may be unable to normally perform decoding based on the received data, and in this case, the first data set or the second data set may be discarded, to reduce complexity of subsequent data processing. Moreover, if the second communication apparatus is a base station, and the base station discards the first data set or the second data set, unnecessary data transmission between the base station and a core network can be further avoided, thereby reducing network load.

Operation 4: Discard data whose count value is less than a smallest count value, or delivering the data whose count value is less than the smallest count value.

Optionally, the smallest count value is a count value of data with a smallest count value in the first data set, or the smallest count value is a count value of data with a smallest count value in received data in the first data set.

Optionally, that the smallest count value is a count value of data with a smallest count value in received data in the first data set may include/be replaced with the following: The smallest count value is a count value of data with a smallest count value in received but undelivered data in the first data set, and the smallest count value is a count value of data with a smallest count value that is in the first data set and that exists/is stored in the reception buffer of the second communication apparatus or the PDCP layer of the second communication apparatus.

Optionally, data corresponding to the smallest count value meets any one or more of the following: (1) The data corresponding to the smallest count value is a first piece of data that is in the second data set and that is received by the second communication apparatus; (2) the data corresponding to the smallest count value is a first piece of data that is in the second data set and that is stored in the reception buffer of the PDCP layer of the second communication apparatus; (3) the second communication apparatus does not discard the data corresponding to the smallest count value; (4) integrity check of the data corresponding to the smallest count value succeeds; (5) the smallest count value is greater than or equal to the first state variable or the first state variable before update; (6) the second communication apparatus has not previously received the data corresponding to the smallest count value; and (7) the second communication apparatus has not previously received the data corresponding to the smallest count value.

For example, that a packet loss rate/a quantity of lost packets/a data amount of lost packets corresponding to the data whose count value is less than the smallest count value is greater than or equal to a second threshold may include/be replaced with that a receiving rate/a received quantity/an amount of received data corresponding to the data whose count value is less than the smallest count value is less than or equal to an eighth threshold.

Optionally, if the packet loss rate/the quantity of lost packets/the data amount of lost packets corresponding to the data whose count value is less than the smallest count value is less than or equal to the second threshold, or the packet loss rate/the quantity of lost packets/the data amount of lost packets is not concerned/considered, the second communication apparatus delivers the data whose count value is less than the smallest count value.

For example, that the packet loss rate/the quantity of lost packets/the data amount of lost packets corresponding to the data whose count value is less than the smallest count value is less than or equal to the second threshold may include/be replaced with that the receiving rate/the received quantity/the amount of received data corresponding to the data whose count value is less than the smallest count value is greater than or equal to the eighth threshold.

For example, when the first timer expires, the second communication apparatus may discard data before the first data set, or deliver the data before the first data set.

Optionally, the data whose count value is less than the smallest count value belongs to a data burst the same as that to which the first data set belongs. In other words, the data whose count value is less than the smallest count value and the first data set are included in a same data burst. For example, the data whose count value is less than the smallest count value is included in a PDU set 1, the first data set is a PDU set 2, and the PDU set 1 and the PDU set 2 are included in a data burst 1.

Optionally, if the packet loss rate/the quantity of lost packets/the data amount of lost packets corresponding to the data whose count value is less than the smallest count value is greater than or equal to the second threshold, the data whose count value is less than the smallest count value belongs to a data burst the same as that to which the first data set belongs. If the packet loss rate/the quantity of lost packets/the data amount of lost packets corresponding to the data whose count value is less than the smallest count value is less than or equal to the second threshold, or the packet loss rate/the quantity of lost packets/the data amount of lost packets is not concerned/considered, the data whose count value is less than the smallest count value belongs to a data burst the same as or different from that to which the first data set belongs.

It may be understood that, through the operation 4, when the first timer expires, the second communication apparatus may discard, in time, data that may be unable to be received (for example, the data before the first data set), or deliver the data before the first data set in time, so that time for the second communication apparatus to wait for receiving data can be shortened, thereby reducing a delay in delivering data by the second communication apparatus, and facilitating decoding by the second communication apparatus. **In** this way, time for the second communication apparatus to wait for receiving data can be shortened, thereby reducing a delay in delivering data by the second communication apparatus. **In** this way, the second communication apparatus may not need to always wait for data (for example, some unreceived data) before the first data set, to avoid a case that the first communication apparatus has stopped sending the data (for example, some unreceived data, or some unreceived data in the data before the first data set) before the first data set, but the second communication apparatus is still waiting for receiving the data (for example, some unreceived data, or some unreceived data in the data before the first data set) before the first data set. This can reduce a delay in delivering data (for example, subsequent data) by the second communication apparatus. For example, even if a reordering timer is still running, the second communication apparatus may deliver the received data before the first data set to an upper layer without waiting for the reordering timer to expire. This avoids that delivery of the received data before the first data set is meaninglessly suspended by some data (for example, data that is in the data before the first data set and that is not received by the second communication apparatus but that the first communication apparatus has stopped sending). Therefore, a delay in delivering data by the second communication apparatus can be reduced, thereby helping improve communication efficiency and quality. **In** addition, considering that when a packet loss reaches a specific degree, the second communication apparatus may be unable to normally perform decoding based on the received data, and in this case, the data before the first data set may be discarded, to reduce complexity of subsequent data processing. Moreover, if the second communication apparatus is a base station, and the base station discards the data before the first data set, unnecessary data transmission between the base station and a core network can be further avoided, thereby reducing network load.

Optionally, the operation 3 and the operation 4 may be replaced with an operation 9: discarding data whose count value is less than or equal to the largest count value, or delivering the data whose count value is less than or equal to the largest count value.

For example, the discarding data whose count value is less than or equal to the largest count value may include/be replaced with: discarding received data in the data whose count value is less than or equal to the largest count value.

For example, the delivering the data whose count value is less than or equal to the largest count value may include/be replaced with: delivering received data in the data whose count value is less than or equal to the largest count value.

For example, the received data in the data whose count value is less than or equal to the largest count value may include/be replaced with any one or more of the following: received but undelivered data in the data whose count value is less than or equal to the largest count value, and data that exists/is stored in the reception buffer of the second communication apparatus or the PDCP layer of the second communication apparatus and whose count value is less than or equal to the largest count value.

Optionally, if a packet loss rate/a quantity of lost packets/a data amount of lost packets corresponding to the data whose count value is less than or equal to the largest count value is greater than or equal to a fifth threshold, the second communication apparatus discards the data whose count value is less than or equal to the largest count value.

For example, that a packet loss rate/a quantity of lost packets/a data amount of lost packets corresponding to the data whose count value is less than or equal to the largest count value is greater than or equal to a fifth threshold may include/be replaced with that a receiving rate/a received quantity/an amount of received data corresponding to the data whose count value is less than or equal to the largest count value is less than or equal to a sixth threshold.

Optionally, the fifth threshold is associated with the second data set or the first data set. For example, the fifth threshold is a maximum packet loss rate corresponding to the first data set, or the fifth threshold is a maximum packet loss rate corresponding to the second data set.

Optionally, if the packet loss rate/the quantity of lost packets/the data amount of lost packets corresponding to the data whose count value is less than or equal to the largest count value is less than or equal to the fifth threshold, or the packet loss rate/the quantity of lost packets/the data amount of lost packets is not concerned/considered, the second communication apparatus delivers the data whose count value is less than or equal to the largest count value.

For example, that the packet loss rate/the quantity of lost packets/the data amount of lost packets corresponding to the data whose count value is less than or equal to the largest count value is less than or equal to the fifth threshold may include/be replaced with that the receiving rate/the received quantity/the amount of received data corresponding to the data whose count value is less than or equal to the largest count value is greater than or equal to the sixth threshold.

It may be understood that, through the operation 9, when the first timer expires, the second communication apparatus may discard, in time, the data whose count value is less than or equal to the largest count value, or deliver, in time, the data whose count value is less than or equal to the largest count value, so that time for the second communication apparatus to wait for receiving data can be shortened, thereby reducing a delay in delivering data by the second communication apparatus, and facilitating decoding by the second communication apparatus. In this way, time for the second communication apparatus to wait for receiving data can be shortened, thereby reducing a delay in delivering data by the second communication apparatus. **In** this way, the second communication apparatus may not need to always wait for the data (for example, some unreceived data) whose count value is less than or equal to the largest count value, to avoid a case that the first communication apparatus has stopped sending the data (for example, some unreceived data, or some unreceived data in the data whose count value is less than or equal to the largest count value) whose count value is less than or equal to the largest count value, but the second communication apparatus is still waiting for receiving unreceived data (for example, some unreceived data, or some unreceived data in the data whose count value is less than or equal to the largest count value) whose count value is less than or equal to the largest count value. This can reduce a delay in delivering data (for example, subsequent data) by the second communication apparatus. For example, even if a reordering timer is still running, the second communication apparatus may deliver, to an upper layer, received data whose count value is less than or equal to the largest count value without waiting for the reordering timer to expire. This avoids that delivery of the received data whose count value is less than or equal to the largest count value is meaninglessly suspended by some data (for example, data that is in the data whose count value is less than or equal to the largest count value and that is not received by the second communication apparatus but that the first communication apparatus has stopped sending). Therefore, a delay in delivering data by the second communication apparatus can be reduced, thereby helping improve communication efficiency and quality. **In** addition, considering that when a packet loss reaches a specific degree, the second communication apparatus may be unable to normally perform decoding based on the received data, and in this case, the data whose count value is less than or equal to the largest count value may be discarded, to reduce complexity of subsequent data processing. Moreover, if the second communication apparatus is a base station, and the base station discards the data whose count value is less than or equal to the largest count value, unnecessary data transmission between the base station and a core network can be further avoided, thereby reducing network load.

S504: When a first condition is met, the second communication apparatus stops the first timer.

Optionally, the first condition includes any one or more of the following: the first data set or the second data set is discarded; the first data set or the second data set is delivered; the first data set or the second data set does not exist in a reception buffer; or the first state variable is greater than the largest count value.

For example, the second communication apparatus may stop the first timer when discarding the first data set, or delivering the data in the first data set, or when the data in the first data set does not exist in the reception buffer, or when the first state variable is greater than the largest count value.

When the first condition is met, the second communication apparatus may stop the first timer in time, to avoid meaningless running of the first timer, reduce burden/complexity of maintaining the timer by a second terminal device, and avoid a problem caused by running of the timer.

It should be noted that, that the second communication apparatus discards the first data set (or the second data set) is not limited to that the second communication apparatus discards all data in the first data set (or the second data set). For example, if a part of data in the first data set has been delivered to an upper layer, the second communication apparatus discards the other part of data in the first data set.

It should be noted that, that the second communication apparatus delivers the data in the first data set (or the second data set) is not limited to that the second communication apparatus delivers all data in the first data set (or the second data set). For example, the second communication apparatus has not received a part of data in the first data set, but because a t-Reordering expires, the second communication apparatus skips these gaps, and these packets are not delivered to the upper layer.

For example, "discarding (or delivering) the first data set or the second data set" may include: discarding (or delivering) all data that is in the first data set or the second data set and that exists/is stored in the reception buffer of the second communication apparatus or the PDCP layer of the second communication apparatus.

The actions of the first communication apparatus or the second communication apparatus in S501 to S504 may be performed by the processor 401 in the communication apparatus 40 shown in FIG. 4 by invoking the application program code stored in the memory 403. This is not limited in this embodiment of this application.

Based on the method shown in FIG. 5, when the first timer expires, the second communication apparatus may discard, in time, data that may be unable to be received, or deliver received data in time, and/or update the first state variable in time, instead of continuing to wait for receiving data that may be unable to be received, data that is no longer sent, or invalid data. This reduces a delay in delivering data by the second communication apparatus, so that the second communication apparatus can perform decoding as soon as possible, thereby improving communication quality and efficiency. In addition, when the first condition is met, the second communication apparatus may stop the first timer, to avoid meaningless running of the first timer, reduce burden/complexity of maintaining the timer by the second terminal device, and avoid a problem caused by running of the timer.

Optionally, in a possible scenario of the method shown in FIG. 5, the second communication apparatus may start a second timer. For example, as shown in FIG. 7, the method shown in FIG. 5 further includes S502A.

S502A: The second communication apparatus starts a second timer.

For example, the second timer is associated with a third data set. For example, the third data set is different from the first data set. For example, a count value of data with a largest count value in the third data set is less than the smallest count value, or the third data set is before or located before the first data set. For example, the third data set may include at least one data burst or at least one PDU set.

For example, the second timer and the first timer have a same type/granularity, but are associated with different data sets.

Optionally, duration of the second timer may be the same as or different from duration of the first timer. This is not limited.

Optionally, if the first data set and the third data set belong to a same data burst, the duration of the second timer may be the same as the duration of the first timer.

Optionally, if the first data set and the third data set belong to different data bursts, the duration of the second timer may be different from the duration of the first timer.

In a possible design, the duration of the second timer is less than the duration of the first timer.

For example, the duration of the second timer may be the duration of the first timer minus second duration. Optionally, the duration of the second timer or the second duration is related to a service periodicity (for example, a periodicity of an XR service). For example, the duration of the second timer may be the duration of the first timer minus the service periodicity. Optionally, the second duration may be configured by a network device, may be preconfigured, may be stored by the second communication apparatus, or may be obtained in another manner. This is not limited in this application. For example, the second duration is equal to the service periodicity.

In a possible implementation, when data in the third data set is not obtained, the second communication apparatus receives the first data from the first communication apparatus, and starts the second timer. For example, when the second communication apparatus receives the first data but has not received data in the third data set before the first data set, the second communication apparatus starts the second timer.

It may be understood that, an operation performed by the second communication apparatus when the second timer expires is similar to an operation performed by the second communication apparatus when the first timer expires. Therefore, reference can be made to corresponding descriptions in S503. A condition for stopping the second timer by the second communication apparatus is similar to a condition for stopping the first timer by the second communication apparatus. Therefore, reference can be made to corresponding descriptions in S504. Details are not described herein again.

It may be understood that, from a perspective of the first communication device, the third data set is sent before the first data or the first data set. If the second communication device first receives the first data, and the second communication device does not start the second timer, but starts the second timer after the second communication device receives the data in the third data set, expired time of the second timer is later than expired time of the first timer, and the second terminal device does not perform data discarding/delivery/state variable update in time based on expiration of the second timer, which causes an extra data delivery delay and affects communication efficiency and quality. The method in which the second communication apparatus receives the first data from the first communication apparatus and starts the second timer can resolve this problem, and can ensure timely data delivery, thereby facilitating decoding by the second communication apparatus and improving communication quality and efficiency.

It should be noted that, S502A may be performed before S502, or may be performed after S502, or may be performed simultaneously with S502. This is not limited.

It should be noted that, steps S501 and S502 may be used as independent embodiments, steps S501 and S502A may be used as independent embodiments, step S503 may be used as an independent embodiment, and step S504 may be used as an independent embodiment.

For example, in the method shown in FIG. 5 and the method shown in FIG. 7, a timer (for example, the first timer or the second timer) is associated with a data set. **In** a specific application, the timer may alternatively be associated with data. Specifically, reference can be made to the methods shown in FIG. 8 and FIG. 9A.

FIG. 8 shows another data transmission method according to an embodiment of this application. The method may include the following steps.

S801: A first communication apparatus sends first data to a second communication apparatus, and correspondingly, the second communication apparatus receives the first data from the first communication apparatus. Alternatively, the first communication apparatus sends second data to the second communication apparatus, and correspondingly, the second communication apparatus receives the second data from the first communication apparatus.

For example, the first communication apparatus may be one of the communication apparatuses in the communication system 30 shown in FIG. 3, and the second communication apparatus may be the other communication apparatus in the communication system 30 shown in FIG. 3. For example, the first communication apparatus is the communication apparatus 301 in FIG. 3, and the second communication apparatus is the communication apparatus 302 in FIG. 3.

For example, that the second communication apparatus receives the first data from the first communication apparatus may include: The second communication apparatus obtains the first data.

It should be noted that, for content (for example, any one or more of the following: that the second communication apparatus obtains the first data, content related to "the first data, a first data set, the second data, a fourth data set, and a largest count value") in the embodiment in FIG. 8, refer to content in the embodiment in FIG. 5. Details are not described herein again.

For example, the second data is associated with the first data set, the first data belongs to the first data set, or the first data set includes the first data; or the second data is associated with the fourth data set, the second data belongs to the fourth data set, or the fourth data set includes the second data.

Optionally, the embodiment in FIG. 8 is applicable to a case in which receiving deadlines of different data (for example, PDUs or PDCP PDUs) in a data set (for example, a data burst or a PDU set) are the same or similar, or is applicable to a case in which receiving deadlines of different data (for example, PDUs or PDCP PDUs) in a data set (for example, a data burst or a PDU set) are different or differ greatly. This is not limited.

S802: The second communication apparatus starts a third timer.

Optionally, the third timer is associated with the first data, or the third timer is a timer corresponding to the first data. Optionally, in the method shown in FIG. 8, the second communication apparatus may start the timer by using data (for example, a PDCP PDU or a PDCP SDU) or COUNT as a granularity. Optionally, in the method shown in FIG. 8, the timer is per data (for example, a PDCP PDU or a PDCP SDU) or COUNT.

In a possible implementation, a PDCP layer of the second communication apparatus starts the third timer.

Optionally, duration of the third timer may be configured by a network device, may be preconfigured, may be stored by the second communication apparatus, or may be obtained in another manner. This is not limited in this application.

Optionally, if the second communication apparatus receives the second data from the first communication apparatus, this application further includes the following: The second communication apparatus starts a sixth timer.

Optionally, the sixth timer is associated with a second data set, or the sixth timer is a timer corresponding to the second data set.

For example, the sixth timer and the third timer have a same type/granularity, but are associated with different data.

Optionally, duration of the sixth timer may be the same as or different from the duration of the third timer. This is not limited.

Optionally, if the second data is associated with the first data set, the duration of the sixth timer may be the same as the duration of the third timer. For example, if the first data and the second data belong to a same data burst, the duration of the sixth timer may be the same as the duration of the third timer.

Optionally, if the second data is associated with the fourth data set, the duration of the sixth timer may be different from the duration of the third timer. For example, if the first data and the second data belong to different data bursts, the duration of the sixth timer may be different from the duration of the third timer.

In a possible design, the duration of the third timer is less than the duration of the sixth timer.

For example, the duration of the third timer may be equal to the duration of the sixth timer minus third duration. Optionally, the duration of the third timer or the third duration is related to a service periodicity (for example, a periodicity of an XR service). For example, the duration of the third timer may be the duration of the sixth timer minus the service periodicity. Optionally, the third duration may be configured by a network device, may be preconfigured, may be stored by the second communication apparatus, or may be obtained in another manner. This is not limited in this application. For example, the third duration is equal to the service periodicity.

In a possible implementation, when the first data is not obtained, the second communication apparatus receives the second data from the first communication apparatus, and the second communication apparatus starts the third timer. For example, when the second communication apparatus receives the second data but has not received the first data, the second communication apparatus starts the third timer.

It may be understood that, from a perspective of the first communication device, the first data is sent before the second data. If the second communication device first receives the second data, and the second communication device does not start the third timer, but starts the third timer after the second communication device receives the first data, expired time of the third timer is later than expired time of the sixth timer, and the second terminal device does not perform data discarding/delivery/state variable update in time based on expiration of the third timer, which causes an extra data delivery delay and affects communication efficiency and quality. The method in which the second communication apparatus receives the second data from the first communication apparatus and starts the third timer can resolve this problem, and can ensure timely data delivery, thereby facilitating decoding by the second communication apparatus and improving communication quality and efficiency.

S803: When the third timer expires, the second communication apparatus performs any one or more of an operation 5, an operation 6, an operation 7, or an operation 8.

The following describes each operation in detail:
Operation 5: Update a first state variable to a second count value.

Optionally, the second count value is greater than a count value of the first data.

Optionally, data corresponding to the second count value is not received by the second communication apparatus.

Optionally, the second count value is greater than a largest count value. Optionally, the second count value is equal to the largest count value+1.

For example, that data corresponding to the second count value is not received by the second communication apparatus may include/be replaced with any one or more of the following: The data corresponding to the second count value has not been delivered to an upper layer (for example, an SDAP layer or an RRC layer), and the data corresponding to the second count value does not exist/is not stored in a reception buffer of the second communication apparatus or the PDCP layer of the second communication apparatus.

For example, the data corresponding to the second count value may include/be replaced with a PDCP SDU corresponding to the second count value.

Optionally, the data corresponding to the second count value is a first piece of unreceived data whose count value is greater than the count value of the first data. For example, the first piece of unreceived data whose count value is greater than the count value of the first data may include/be replaced with any one or more of the following: a first piece of data that has not been delivered to an upper layer (for example, an SDAP layer or an RRC layer) and whose count value is greater than the count value of the first data, and a first piece of data that does not exist/is not stored in the reception buffer of the second communication apparatus or the PDCP layer of the second communication apparatus and whose count value is greater than the count value of the first data.

For example, that the second communication apparatus updates a first state variable to a second count value may be understood as that the second communication apparatus updates the first state variable to a count value of a first piece of data that has not been delivered to an upper layer, where the count value is greater than the count value of the first data.

For example, the second communication apparatus updates the first state variable to COUNT of a first piece of data (for example, a PDCP SDU) that has not been delivered to an upper layer (for example, an SDAP layer or an RRC layer). COUNT of the first piece of data is greater than the count value of the first data. For example, the second communication apparatus updates the first state variable to a first gap after the first data.

In a possible design, the second count value is greater than the largest count value.

Optionally, the data corresponding to the second count value is a first piece of unreceived data whose count value is greater than the largest count value. For example, the first piece of unreceived data whose count value is greater than the largest count value may include/be replaced with any one or more of the following: a first piece of data that has not been delivered to an upper layer (for example, an SDAP layer or an RRC layer) and whose count value is greater than the largest count value, and a first piece of data that does not exist/is not stored in the reception buffer of the second communication apparatus or the PDCP layer of the second communication apparatus and whose count value is greater than the largest count value.

For example, if the second communication apparatus knows a count value of data with a largest count value in the second data set, the largest count value is the count value of the data with the largest count value in the second data set; or if the second communication apparatus does not know the count value of the data with the largest count value in the second data set, the largest count value is a count value of data with a largest count value in received data in the second data set.

For example, the second communication apparatus updates the first state variable to COUNT of a first piece of data (for example, a PDCP SDU) that has not been delivered to an upper layer (for example, an SDAP layer or an RRC layer). COUNT of the first piece of data is greater than the largest count value. For example, the second communication apparatus updates the first state variable to a first gap after the second data set. For example, the second communication apparatus updates the first state variable to COUNT after a last piece of received data in the second data set. For example, the second communication apparatus updates the first state variable to COUNT of the last piece of received data in the second data set+1.

It may be understood that, through the operation 5, when the third timer expires, the second communication apparatus may update the first state variable to the second count value. In this way, the second communication apparatus may not need to always wait for data whose count value is less than the second count value or the largest count value or data (for example, some unreceived data) before the first data, to avoid a case that the first communication apparatus has stopped sending the data whose count value is less than the second count value or the largest count value or the data (for example, some unreceived data, or some unreceived data in data that is before the first data set, the second data set, or the first data) before the first data, but the second communication apparatus is still waiting for receiving the data whose count value is less than the second count value or the largest count value or the data (for example, some unreceived data, or some unreceived data in the data that is before the first data set, the second data set, or the first data) before the first data. This can reduce a delay in delivering data (for example, subsequent data) by the second communication apparatus. For example, even if a reordering timer is still running, the second communication apparatus may update the first state variable or push or slide a PDCP window without waiting for the reordering timer to expire. This prevents update of the first state variable or the PDCP window from being meaninglessly suspended by some data (for example, data that is not received by the second communication apparatus but that the first communication apparatus has stopped sending). Therefore, a delay in delivering data (for example, subsequent data) by the second communication apparatus can be reduced, thereby facilitating decoding by the second communication apparatus, and helping improve communication efficiency and quality.

Operation 6: Deliver at least one piece of received data whose count value is greater than the count value of the first data; or deliver at least one piece of received data whose count value is greater than the largest count value.

For example, the "at least one piece of received data whose count value is greater than the count value of the first data" may include any one or more of the following: at least one piece of received but undelivered data whose count value is greater than the count value of the first data; at least one piece of data that exists/is stored in the reception buffer of the second communication apparatus or the PDCP layer of the second communication apparatus and whose count value is greater than the count value of the first data; data that is consecutively received/consecutively stored after the first data; and data that is consecutively received/consecutively stored and whose count value is greater than the count value of the first data; and data that is consecutively received/consecutively stored starting from the count value of the first data+1.

Optionally, a count value of the at least one piece of data is consecutive. For example, the at least one piece of data includes data whose count value is the count value of the first data+1.

For example, the at least one piece of data includes data that is consecutively received/consecutively stored starting from data whose count value is the count value of the first data+1.

It should be noted that for content related to "delivering at least one piece of received data whose count value is greater than the largest count value", refer to the embodiment in FIG. 5. Details are not described herein again.

Optionally, the second communication apparatus knows a count value of data with a largest count value in the second data set, and the second communication apparatus performs the operation 6. Alternatively, optionally, the largest count value is a count value of data with a largest count value in the second data set, and the second communication apparatus performs the operation 6.

It may be understood that, through the operation 6, when the third timer expires, the second communication apparatus may deliver, in time, data whose count value is greater than the largest count value or deliver, in time, data whose count value is greater than the count value of the first data, to reduce a delay in delivering data by the second communication apparatus. In this way, the second communication apparatus may not need to always wait for data whose count value is less than the second count value or the largest count value or data (for example, some unreceived data) before the first data, to avoid a case that the first communication apparatus has stopped sending the data whose count value is less than the second count value or the largest count value or the data (for example, some unreceived data, or some unreceived data in data that is before the first data set, the second data set, or the first data) before the first data, but the second communication apparatus is still waiting for receiving the data whose count value is less than the second count value or the largest count value or the data (for example, some unreceived data, or some unreceived data in the data that is before the first data set, the second data set, or the first data) before the first data. This can reduce a delay in delivering data (for example, the data whose count value is greater than the largest count value or the count value of the first data, or subsequent data) by the second communication apparatus. For example, even if a reordering timer is still running, the second communication apparatus may deliver, to an upper layer, received data whose count value is greater than the largest count value or the count value of the first data without waiting for the reordering timer to expire. This avoids that delivery of the data whose count value is greater than the largest count value or the count value of the first data is meaninglessly suspended by some data (for example, data that is not received by the second communication apparatus but that the first communication apparatus has stopped sending). Therefore, a delay in delivering data by the second communication apparatus can be reduced, thereby helping improve communication efficiency and quality.

Operation 7: Discard the first data set or the second data set, deliver the first data, or discard the first data.

For example, the discarding the first data set or the second data set may include/be replaced with: discarding received data in the first data set or the second data set.

For example, the received data in the first data set or the second data set may include/be replaced with any one or more of the following: received but undelivered data in the first data set or the second data set, and data that is in the first data set or the second data set and that exists/is stored in the reception buffer of the second communication apparatus or the PDCP layer of the second communication apparatus.

Optionally, if a packet loss rate/a quantity of lost packets/a data amount of lost packets corresponding to the first data set or the second data set is greater than or equal to a third threshold, the second communication apparatus discards the first data set or the second data set.

For example, that a packet loss rate/a quantity of lost packets/a data amount of lost packets corresponding to the first data set or the second data set is greater than or equal to a third threshold may include/be replaced with that a receiving rate/a received quantity/an amount of received data corresponding to the first data set or the second data set is less than or equal to a ninth threshold.

Optionally, the third threshold is associated with the second data set or the first data set. For example, the third threshold is a maximum packet loss rate corresponding to the first data set, or the third threshold is a maximum packet loss rate corresponding to the second data set.

Optionally, if the packet loss rate/the quantity of lost packets/the data amount of lost packets corresponding to the first data set or the second data set is less than or equal to the third threshold, or the packet loss rate/the quantity of lost packets/the data amount of lost packets is not concerned/considered, the second communication apparatus delivers the first data.

For example, that the packet loss rate/the quantity of lost packets/the data amount of lost packets corresponding to the first data set or the second data set is less than or equal to the third threshold may include/be replaced with that the receiving rate/the received quantity/the amount of received data corresponding to the first data set or the second data set is greater than or equal to the ninth threshold.

Optionally, if the packet loss rate/the quantity of lost packets/the data amount of lost packets corresponding to the second data set is greater than or equal to the third threshold, the second communication apparatus discards the second data set.

For example, that the packet loss rate/the quantity of lost packets/the data amount of lost packets corresponding to the second data set is greater than or equal to the third threshold may include/be replaced with that the receiving rate/the received quantity/the amount of received data corresponding to the second data set is less than or equal to the ninth threshold.

Optionally, if the packet loss rate/the quantity of lost packets/the data amount of lost packets corresponding to the second data set is less than or equal to the third threshold, or the packet loss rate/the quantity of lost packets/the data amount of lost packets is not concerned/considered, the second communication apparatus delivers the first data.

For example, that the packet loss rate/the quantity of lost packets/the data amount of lost packets corresponding to the second data set is less than or equal to the third threshold may include/be replaced with that the receiving rate/the received quantity/the amount of received data corresponding to the second data set is greater than or equal to the ninth threshold.

It may be understood that, through the operation 7, when the third timer expires, the second communication apparatus may discard the first data set, the second data set, or the first data in time, or deliver the first data set, the second data set, or the first data in time, so that time for the second communication apparatus to wait for receiving data can be shortened, thereby reducing a delay in delivering data by the second communication apparatus, and facilitating decoding by the second communication apparatus. **In** this way, the second communication apparatus may not need to always wait for data (for example, some unreceived data) whose count value is less than the first count value or the largest count value, to avoid a case that the first communication apparatus has stopped sending data (for example, some unreceived data, or some unreceived data in the first data set or the second data set) whose count value is less than the first count value or the largest count value, the second communication apparatus is still waiting for receiving unreceived data (for example, some unreceived data, or some unreceived data in the first data set or the second data set) whose count value is less than the first count value or the largest count value. This can reduce a delay in delivering data (for example, subsequent data) by the second communication apparatus. For example, even if a reordering timer is still running, the second communication apparatus may deliver the received first data set or the received second data set to an upper layer without waiting for the reordering timer to expire. This avoids that delivery of the received data in the first data set or in the second data set is meaninglessly suspended by some data (for example, data that is in the first data set or the second data set and that is not received by the second communication apparatus but that the first communication apparatus has stopped sending). Therefore, a delay in delivering data by the second communication apparatus can be reduced, thereby helping improve communication efficiency and quality. In addition, considering that when a packet loss reaches a specific degree, the second communication apparatus may be unable to normally perform decoding based on the received data, and in this case, the first data set or the second data set or the first data may be discarded, to reduce complexity of subsequent data processing. Moreover, if the second communication apparatus is a base station, and the base station discards the first data set or the second data set, unnecessary data transmission between the base station and a core network can be further avoided, thereby reducing network load.

Operation 8: Discard data whose count value is less than the count value of the first data, or deliver received data whose count value is less than the count value of the first data; or discard data whose count value is less than a smallest count value, or deliver received data whose count value is less than the smallest count value.

Optionally, if a packet loss rate/a quantity of lost packets/a data amount of lost packets corresponding to the data whose count value is less than the count value of the first data is greater than or equal to a fourth threshold, the second communication apparatus discards the data whose count value is less than the count value of the first data.

For example, that a packet loss rate/a quantity of lost packets/a data amount of lost packets corresponding to the data whose count value is less than the count value of the first data is greater than or equal to a fourth threshold may include/be replaced with that a receiving rate/a received quantity/an amount of received data corresponding to the data whose count value is less than the count value of the first data is less than or equal to a tenth threshold.

Optionally, if the packet loss rate/the quantity of lost packets/the data amount of lost packets corresponding to the data whose count value is less than the count value of the first data is less than or equal to the fourth threshold, or the packet loss rate/the quantity of lost packets/the data amount of lost packets is not concerned/considered, the second communication apparatus delivers the data whose count value is less than the count value of the first data.

For example, that the packet loss rate/the quantity of lost packets/the data amount of lost packets corresponding to the data whose count value is less than the count value of the first data is less than or equal to the fourth threshold may include/be replaced with that the receiving rate/the received quantity/the amount of received data corresponding to the data whose count value is less than the count value of the first data is greater than or equal to the tenth threshold.

For example, when the third timer expires, the second communication apparatus may discard data before the first data, or deliver the data before the first data.

It may be understood that, through the operation 8, when the third timer expires, the second communication apparatus may discard, in time, data that may be unable to be received (for example, the data before the first data), or deliver the data before the first data in time, so that time for the second communication apparatus to wait for receiving data can be shortened, thereby reducing a delay in delivering data by the second communication apparatus, and facilitating decoding by the second communication apparatus. **In** this way, time for the second communication apparatus to wait for receiving data can be shortened, thereby reducing a delay in delivering data by the second communication apparatus. **In** this way, the second communication apparatus may not need to always wait for data (for example, some unreceived data) before the first data, to avoid a case that the first communication apparatus has stopped sending the data (for example, some unreceived data, or some unreceived data in the data before the first data) before the first data, but the second communication apparatus is still waiting for receiving the data (for example, some unreceived data, or some unreceived data in the data before the first data) before the first data. This can reduce a delay in delivering data (for example, subsequent data) by the second communication apparatus. For example, even if a reordering timer is still running, the second communication apparatus may deliver the received data before the first data to an upper layer without waiting for the reordering timer to expire. This avoids that delivery of the received data before the first data is meaninglessly suspended by some data (for example, data that is in the data before the first data set and that is not received by the second communication apparatus but that the first communication apparatus has stopped sending). Therefore, a delay in delivering data by the second communication apparatus can be reduced, thereby helping improve communication efficiency and quality. **In** addition, considering that when a packet loss reaches a specific degree, the second communication apparatus may be unable to normally perform decoding based on the received data, and in this case, the data before the first data may be discarded, to reduce complexity of subsequent data processing. Moreover, if the second communication apparatus is a base station, and the base station discards the data before the first data, unnecessary data transmission between the base station and a core network can be further avoided, thereby reducing network load.

Optionally, the operation 7 and the operation 8 may be replaced with an operation 10: discarding data whose count value is less than or equal to the largest count value, or delivering the data whose count value is less than or equal to the largest count value; or discarding data whose count value is less than or equal to the count value of the first data, or delivering the data whose count value is less than or equal to the count value of the first data.

For example, the discarding data whose count value is less than or equal to the count value of the first data may include/be replaced with: discarding received data in the data whose count value is less than or equal to the count value of the first data.

For example, the delivering the data whose count value is less than or equal to the count value of the first data may include/be replaced with: delivering received data in the data whose count value is less than or equal to the count value of the first data.

For example, the received data in the data whose count value is less than or equal to the count value of the first data may include/be replaced with any one or more of the following: received but undelivered data in the data whose count value is less than or equal to the count value of the first data, and data that exists/is stored in the reception buffer of the second communication apparatus or the PDCP layer of the second communication apparatus and whose count value is less than or equal to the count value of the first data.

Optionally, if a packet loss rate/a quantity of lost packets/a data amount of lost packets corresponding to the data whose count value is less than or equal to the count value of the first data is greater than or equal to an eleventh threshold, the second communication apparatus discards the data whose count value is less than or equal to the count value of the first data.

For example, that a packet loss rate/a quantity of lost packets/a data amount of lost packets corresponding to the data whose count value is less than or equal to the count value of the first data is greater than or equal to an eleventh threshold may include/be replaced with that a receiving rate/a received quantity/an amount of received data corresponding to the data whose count value is less than or equal to the count value of the first data is less than or equal to a twelfth threshold.

Optionally, if the packet loss rate/the quantity of lost packets/the data amount of lost packets corresponding to the data whose count value is less than or equal to the count value of the first data is less than or equal to the eleventh threshold, or the packet loss rate/the quantity of lost packets/the data amount of lost packets is not concerned/considered, the second communication apparatus delivers the data whose count value is less than or equal to the count value of the first data.

For example, that the packet loss rate/the quantity of lost packets/the data amount of lost packets corresponding to the data whose count value is less than or equal to the count value of the first data is less than or equal to the eleventh threshold may include/be replaced with that the receiving rate/the received quantity/the amount of received data corresponding to the data whose count value is less than or equal to the count value of the first data is greater than or equal to the twelfth threshold.

It may be understood that, through the operation 10, when the third timer expires, the second communication apparatus may discard, in time, the data whose count value is less than or equal to the largest count value or the count value of the first data, or deliver, in time, the data whose count value is less than or equal to the largest count value or the count value of the first data, so that time for the second communication apparatus to wait for receiving data can be shortened, thereby reducing a delay in delivering data by the second communication apparatus, and facilitating decoding by the second communication apparatus. **In** this way, time for the second communication apparatus to wait for receiving data can be shortened, thereby reducing a delay in delivering data by the second communication apparatus. **In** this way, the second communication apparatus may not need to always wait for the data (for example, some unreceived data) whose count value is less than the largest count value or the count value of the first data, to avoid a case that the first communication apparatus has stopped sending the data (for example, some unreceived data, or some unreceived data in the data whose count value is less than or equal to the largest count value or the count value of the first data) whose count value is less than or equal to the largest count value or the count value of the first data, but the second communication apparatus is still waiting for receiving unreceived data (for example, some unreceived data, or some unreceived data in the data whose count value is less than or equal to the largest count value or the count value of the first data) whose count value is less than or equal to the largest count value or the count value of the first data. This can reduce a delay in delivering data (for example, subsequent data) by the second communication apparatus. For example, even if a reordering timer is still running, the second communication apparatus may deliver, to an upper layer, received data whose count value is less than or equal to the largest count value or the count value of the first data without waiting for the reordering timer to expire. This avoids that delivery of the received data whose count value is less than or equal to the largest count value or the count value of the first data is meaninglessly suspended by some data (for example, data that is in the data whose count value is less than or equal to the largest count value or the count value of the first data and that is not received by the second communication apparatus but that the first communication apparatus has stopped sending). Therefore, a delay in delivering data by the second communication apparatus can be reduced, thereby helping improve communication efficiency and quality. **In** addition, considering that when a packet loss reaches a specific degree, the second communication apparatus may be unable to normally perform decoding based on the received data, and in this case, the data whose count value is less than or equal to the largest count value or the count value of the first data may be discarded, to reduce complexity of subsequent data processing. Moreover, if the second communication apparatus is a base station, and the base station discards the data whose count value is less than or equal to the largest count value or the count value of the first data, unnecessary data transmission between the base station and a core network can be further avoided, thereby reducing network load.

Optionally, in S804, when a second condition is met, the second communication apparatus stops the third timer.

Optionally, the second condition includes any one or more of the following: the first data is discarded; the first data set or the second data set is discarded; the first data is delivered; data in the first data set or data in the second data set is delivered; the first data does not exist in a reception buffer; the data in the first data set or the data in the second data set does not exist in the reception buffer; the first state variable is greater than the count value of the first data; or the first state variable is greater than the largest count value.

It should be noted that, that the second communication apparatus discards the first data set (or the second data set) is not limited to that the second communication apparatus discards all data in the first data set (or the second data set). For example, if a part of data in the first data set has been delivered to an upper layer, the second communication apparatus discards the other part of data in the first data set.

It should be noted that, that the second communication apparatus delivers the data in the first data set (or the second data set) is not limited to that the second communication apparatus delivers all data in the first data set (or the second data set). For example, the second communication apparatus has not received a part of data in the first data set, but because a t-Reordering expires, the second communication apparatus skips these gaps, and these packets are not delivered to the upper layer.

The actions of the first communication apparatus or the second communication apparatus in S801 to S804 may be performed by the processor 401 in the communication apparatus 40 shown in FIG. 4 by invoking the application program code stored in the memory 403. This is not limited in this embodiment of this application.

Based on the method shown in FIG. 8, when the third timer expires, the second communication apparatus may discard, in time, data that may be unable to be received, or deliver received data in time, and/or update the first state variable in time, instead of continuing to wait for receiving data that may be unable to be received, data that is no longer sent, or invalid data. This reduces a delay in delivering data by the second communication apparatus, so that the second communication apparatus can perform decoding as soon as possible. In addition, when the second condition is met, the second communication apparatus may stop the third timer, to avoid meaningless running of the third timer, reduce burden/complexity of maintaining the timer by the second terminal device, and avoid a problem caused by running of the timer.

Optionally, in a possible scenario of the method shown in FIG. 8, the second communication apparatus further starts a fourth timer. For example, as shown in FIG. 9A, the method shown in FIG. 8 further includes S802A.

S802A: The second communication apparatus starts a fourth timer.

Optionally, the fourth timer is associated with third data. For example, the third data is different from the first data. For example, a count value of the third data is less than the count value of the first data.

For example, the fourth timer and the third timer have a same type/granularity, but are associated with different data.

Optionally, duration of the fourth timer may be the same as or different from the duration of the third timer. This is not limited.

Optionally, if the third data is associated with the first data set, the duration of the fourth timer may be the same as the duration of the third timer. For example, if the first data and the third data belong to a same data burst, the duration of the fourth timer may be the same as the duration of the third timer.

Optionally, if the third data is associated with the third data set, the duration of the fourth timer may be different from the duration of the third timer. For example, if the first data and the third data belong to different data bursts, the duration of the fourth timer may be different from the duration of the third timer.

In a possible design, the duration of the fourth timer is less than the duration of the third timer.

For example, the duration of the fourth timer may be the duration of the third timer minus fourth duration. Optionally, the duration of the fourth timer or the fourth duration is related to a service periodicity (for example, a periodicity of an XR service). For example, the duration of the fourth timer may be the duration of the third timer minus the periodicity of the XR service. Optionally, the fourth duration may be configured by a network device, may be preconfigured, may be stored by the second communication apparatus, or may be obtained in another manner. This is not limited in this application. For example, the fourth duration is equal to the service periodicity.

In a possible implementation, when the third data is not obtained, the second communication apparatus receives the first data from the first communication apparatus, and starts the fourth timer. For example, when the second communication apparatus receives the first data but has not received the third data before the first data, the second communication apparatus starts the fourth timer.

It may be understood that, an operation performed by the second communication apparatus when the fourth timer expires is similar to an operation performed by the second communication apparatus when the third timer expires. Therefore, reference can be made to corresponding descriptions in S803. A condition for stopping the fourth timer by the second communication apparatus is similar to a condition for stopping the third timer by the second communication apparatus. Therefore, reference can be made to corresponding descriptions in S804. Details are not described herein again.

It may be understood that, S802A may be performed before S802, or may be performed after S802, or may be performed simultaneously with S802. This is not limited.

It should be noted that, steps S801 and S802 may be used as independent embodiments, steps S801 and S802A may be used as independent embodiments, step S803 may be used as an independent embodiment, and step S804 may be used as an independent embodiment.

It should be noted that in this application, the timer may not be started based on data receiving. For example, the timer is started based on a time point. In this application, how to start the timer is not limited. In this application, there is no dependency relationship between content related to timer expiration and/or timer stopping and content related to timer start, and the content may be independently implemented. This is not limited in this application.

It should be noted that in this application, a value of the timer may or may not consider a delay requirement of a service. This is not limited.

For a transmit end, if transmission of a group of data cannot meet a decoding requirement of a receive end (for example, a delay requirement is met, but transmission still meets the decoding requirement), it is meaningless for the transmit end to continue to transmit remaining data in the group of data and subsequent associated data, and resources and device power consumption are wasted. How to control the transmit end not to continue to transmit subsequent meaningless data needs to be resolved.

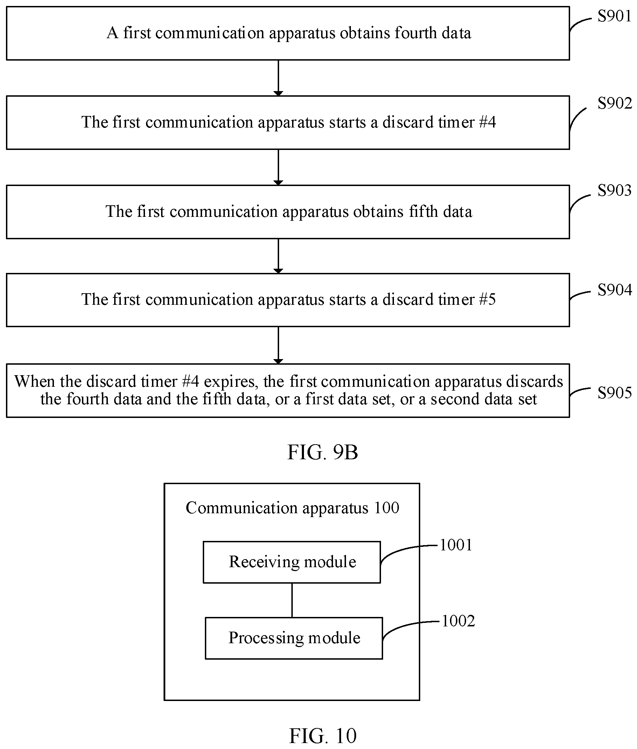

FIG. 9B shows a data transmission method according to an embodiment of this application. The method may include the following steps.

S901: A first communication apparatus obtains fourth data.

For example, that a first communication apparatus obtains fourth data may include/be replaced with the following: A PDCP entity of the first communication apparatus obtains the fourth data from an upper layer (for example, an SDAP layer).

Optionally, the fourth data is associated with a first data set, the fourth data belongs to the first data set, or the first data set includes the fourth data.

Optionally, the fourth data is a first piece of data in the first data set.

S902: The first communication apparatus starts a discard timer #4.

For example, the discard timer 4 is associated with the fourth data.

For example, the discard timer is per PDCP PDU or PDCP SDU. For example, each PDCP PDU or PDCP SDU corresponds to one discard timer. In the conventional technology, when a discard timer expires, a PDCP PDU and/or a PDCP SDU corresponding to the discard timer are/is discarded. For example, the discard timer is discardTimer.

Optionally, in S903, the first communication apparatus obtains fifth data.

For example, that the first communication apparatus obtains fifth data may include/be replaced with the following: The PDCP entity of the first communication apparatus obtains the fifth data from the upper layer (for example, the SDAP layer).

Optionally, the fifth data is associated with the first data set, the fifth data belongs to the first data set, or the first data set includes the fifth data.

Optionally, the fifth data is associated with a second data set, the fifth data belongs to the second data set, or the second data set includes the fifth data.

For example, the fifth data is after the fourth data. For example, COUNT of the fifth data is greater than COUNT of the fourth data.

Optionally, in S904, the first communication apparatus starts a discard timer #5.

S905: When the discard timer #4 expires, the first communication apparatus discards the fourth data and the fifth data, or the first data set, or the second data set.

Optionally, when the discard timer #4 expires, and a packet loss rate/a quantity of lost packets/a data amount of lost packets corresponding to the first data set reaches a specific degree (for example, greater than or equal to a thirteenth threshold), the first communication apparatus discards the fourth data and the fifth data, or the first data set, or the second data set.

Optionally, discarding data may include: discarding a PDCP PDU and/or a PDCP SDU corresponding to the data.

It should be noted that, according to the method, when the discard timer #4 expires, the first communication apparatus may discard the fourth data and the fifth data, or the first data set, or the second data set. This can prevent the first communication apparatus from continuing to transmit subsequent meaningless data, thereby helping save resources and reduce device power consumption, and also helping improve a system capacity.

The embodiments mentioned above in this application may be combined when the solutions do not conflict. This is not limited.

It should be understood that, the conventional technology may change with evolution of the technical solutions, and the technical solutions provided in this application are not limited to the provided conventional technology.

It should be noted that different embodiments of this application or some steps (for example, any one or more steps) in different embodiments may be combined with each other to form a new embodiment. It should be noted that, some steps or any one or more steps in different embodiments may include an optional step in an embodiment, may include a mandatory step in an embodiment, or may include an optional step and a mandatory step in an embodiment. This is not limited in this application.

It should be noted that, unless otherwise specified and a logical conflict occurs, terms and/or descriptions in different embodiments are consistent and may be referenced by each other.

It should be noted that a sequence of the steps in embodiments of this application is not limited in this application.

It should be noted that a determining sequence of different conditions in embodiments of this application is not limited in this application.

It should be noted that "after" and "when" in this application do not strictly limit a time point.

It may be understood that, in the foregoing embodiments, the method and/or the step implemented by the second communication apparatus may also be implemented by a component (for example, a chip or a circuit) that can be used in the second communication apparatus, and the method and/or the step implemented by the first communication apparatus may also be implemented by a component (for example, a chip or a circuit) that can be used in the first communication apparatus.

The solutions provided in embodiments of this application are mainly described above from a perspective of interaction between apparatuses. Correspondingly, an embodiment of this application further provides a communication apparatus. The communication apparatus may be the second communication apparatus in the foregoing method embodiment, an apparatus including the second communication apparatus, or a component that can be used in the second communication apparatus. It may be understood that, the second communication apparatus or the like includes a corresponding hardware structure and/or software module for performing each function to implement the foregoing functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A skilled person may use different methods to implement the described functions for each particular application, but this implementation should not be considered as beyond the scope of this application.

In embodiments of this application, the second communication apparatus may be divided into functional modules based on the foregoing method example. For example, each functional module may be obtained through division for each corresponding function, or two or more functions may be integrated into one processing module. The integrated module may be implemented in a form of hardware, or may be implemented in a form of a software functional module. It may be understood that, in embodiments of this application, module division is an example, and is merely logical function division. In actual implementation, there may be another division manner.

For example, when each functional module is obtained through division in an integrated manner, FIG. 10 is a diagram of a structure of a communication apparatus 100. The communication apparatus 100 includes a receiving module 1001 and a processing module 1002. The receiving module 1001 may also be referred to as a receiving unit, is configured to perform a receiving operation, and may be, for example, a receiving circuit, a receiving machine, a receiver, or a communication interface. The processing module 1002 may also be referred to as a processing unit, is configured to perform an operation other than the receiving operation, and may be, for example, a processing circuit or a processor.

**In** some embodiments, the communication apparatus 100 may further include a storage module and/or a sending module (not shown in FIG. 10). The storage module may be configured to store program instructions and data. The sending module may also be referred to as a sending unit, is configured to perform a sending operation, and may be, for example, a sending circuit, a sending machine, a transmitter, or a communication interface.

For example, the communication apparatus 100 is, for example, the second communication apparatus in the embodiment shown in FIG. 5 or the embodiment shown in FIG. 7.

The receiving module 1001 is configured to obtain first data in a first data set. For example, the receiving module 1001 may be configured to perform S501.

The processing module 1002 is configured to start a first timer. For example, the processing module 1002 may be configured to perform S502.

The processing module 1002 is further configured to: when the first timer expires, perform one or more of the following operations: updating a first state variable to a first count value; delivering at least one piece of received but undelivered data whose count value is greater than a largest count value; discarding the first data set, or delivering the first data set; or discarding data whose count value is less than a smallest count value, or delivering the data whose count value is less than the smallest count value, where the first count value is greater than the largest count value, data corresponding to the first count value is not received, and the first state variable indicates a count value of a first piece of data to be delivered; a count value of the at least one piece of data is consecutive, and the at least one piece of data includes data whose count value is the largest count value+1; the smallest count value is a count value of data with a smallest count value in the first data set, or the smallest count value is a count value of data with a smallest count value in received data in the first data set; and the largest count value is a count value of data with a largest count value in a second data set, or the largest count value is a count value of data with a largest count value in received data in the second data set.

For example, the processing module 1002 may be further configured to perform S503.

**In** a possible implementation, the first data set includes some or all data in the second data set.

In a possible implementation, the first data is a first piece of obtained data in the first data set.

In a possible implementation, the first data set includes a data burst or a protocol data unit set.

In a possible implementation, the first timer is associated with the first data set.

In a possible implementation, the processing module 1002 is further configured to stop the first timer when a first condition is met, where the first condition includes any one or more of the following: the first data set or the second data set is discarded; or data in the first data set or data in the second data set is delivered; or the data in the first data set or the data in the second data set does not exist in a reception buffer; or the first state variable is greater than the largest count value.

In a possible implementation, the processing module 1002 is further configured to start a second timer, where the second timer is associated with a third data set, and the third data set is different from the first data set.

In a possible implementation, the processing module 1002 is specifically configured to start the second timer if data in the third data set is not obtained, where a count value of data with a largest count value in the third data set is less than the smallest count value.

In a possible implementation, duration of the second timer is less than duration of the first timer.

In a possible implementation, the discarding the first data set, or delivering the first data set includes: discarding the first data set when a packet loss rate corresponding to the first data set is greater than or equal to a first threshold; or delivering the first data set when the packet loss rate corresponding to the first data set is less than the first threshold.

In a possible implementation, the discarding data whose count value is less than a smallest count value, or delivering received data whose count value is less than the smallest count value includes: when a packet loss rate corresponding to the data whose count value is less than the smallest count value is greater than or equal to a second threshold, discarding the data whose count value is less than the smallest count value; or when the packet loss rate corresponding to the data whose count value is less than the smallest count value is less than the second threshold, delivering the received data whose count value is less than the smallest count value.

In a possible implementation, the data whose count value is less than the smallest count value and the first data set belong to a same data burst.

When the communication apparatus 100 is used to implement a function of the second communication apparatus, for another function that can be implemented by the communication apparatus, refer to the related descriptions in the embodiment shown in FIG. 5 or the embodiment shown in FIG. 7. Details are not described again.

Alternatively, for example, the communication apparatus 100 is, for example, the second communication apparatus in Embodiment 8 shown in FIG. 8 or the embodiment shown in FIG. 9A.

The receiving module 1001 is configured to obtain first data in a first data set. For example, the receiving module 1001 may be configured to perform S801.

The processing module 1002 is configured to start a third timer. For example, the processing module 1002 may be configured to perform S802.

The processing module 1002 is further configured to: when the third timer expires, perform one or more of the following operations: updating a first state variable to a second count value; delivering at least one piece of received but undelivered data whose count value is greater than a count value of the first data; discarding the first data set, or delivering the first data; or discarding data whose count value is less than a smallest count value, or delivering received but undelivered data whose count value is less than the count value of the first data, where the second count value is greater than the count value of the first data, data corresponding to the second count value is not received, and the first state variable indicates a count value of a first piece of data to be delivered; a count value of the at least one piece of data is consecutive, and the at least one piece of data includes data whose count value is a largest count value+1, or the at least one piece of data includes data whose count value is the count value of the first data+1; the largest count value is a count value of data with a largest count value in a second data set, or the largest count value is a count value of data with a largest count value in received but undelivered data in the second data set; and the smallest count value is a count value of data with a smallest count value in the first data set, or the smallest count value is a count value of data with a smallest count value in received but undelivered data in the first data set.

For example, the processing module 1002 is further configured to perform S803.

In a possible implementation, the first data set includes some or all data in the second data set.

In a possible implementation, the second count value is greater than the largest count value.

In a possible implementation, the first data set includes a data burst or a protocol data unit set.

In a possible implementation, the third timer is associated with the first data.

In a possible implementation, the processing module 1002 is further configured to stop the third timer when a second condition is met, where the second condition includes any one or more of the following: or the first data is discarded; or the first data set or the second data set is discarded; or the first data is delivered; or data in the first data set or data in the second data set is delivered; or the first data does not exist in a reception buffer; or the data in the first data set or the data in the second data set does not exist in the reception buffer; or the first state variable is greater than the count value of the first data; or the first state variable is greater than the largest count value.

In a possible implementation, the processing module 1002 is further configured to start a fourth timer, where the fourth timer is associated with second data, and the second data is different from the first data.

In a possible implementation, the processing module 1002 is specifically configured to start the fourth timer if the second data is not obtained, where a count value of the second data is less than the count value of the first data.

In a possible implementation, duration of the fourth timer is less than duration of the third timer.

In a possible implementation, the discarding the first data set, or delivering the first data includes: discarding the first data set if a packet loss rate corresponding to the first data set is greater than or equal to a third threshold; or delivering the first data if the packet loss rate corresponding to the first data set is less than the third threshold.

In a possible implementation, the discarding data whose count value is less than a smallest count value, or delivering received data whose count value is less than the count value of the first data includes: if a packet loss rate corresponding to the data whose count value is less than the smallest count value is greater than or equal to a fourth threshold, discarding the data whose count value is less than the smallest count value; or if the packet loss rate corresponding to the data whose count value is less than the smallest count value is less than the fourth threshold, delivering the received data whose count value is less than the count value of the first data.

When the communication apparatus 100 is used to implement a function of the second communication apparatus, for another function that can be implemented by the communication apparatus, refer to the related descriptions in the embodiment shown in FIG. 8 or the embodiment shown in FIG. 9A. Details are not described again.

In a simple embodiment, a person skilled in the art may figure out that the communication apparatus 100 may be in the form shown in FIG. 4. For example, the processor 401 in FIG. 4 may invoke the computer-executable instructions stored in the memory 403, to enable the communication apparatus 100 to perform the method in the foregoing method embodiment.

For example, functions/implementation processes of the receiving module 1001 and the processing module 1002 in FIG. 10 may be implemented by the processor 401 in FIG. 4 by invoking the computer-executable instructions stored in the memory 403. Alternatively, a function/implementation process of the processing module 1002 in FIG. 10 may be implemented by the processor 401 in FIG. 4 by invoking the computer-executable instructions stored in the memory 403, and a function/implementation process of the receiving module 1001 in FIG. 10 may be implemented by using the communication interface 404 in FIG. 4.

It may be understood that, one or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedure.

Optionally, an embodiment of this application further provides a chip system, including at least one processor and an interface. The at least one processor is coupled to a memory by using the interface, and when the at least one processor executes a computer program or instructions in the memory, the method according to any one of the foregoing method embodiments is performed. In a possible implementation, the chip system further includes the memory. Optionally, the chip system may include a chip, or may include a chip and another discrete component. This is not specifically limited in embodiments of this application.

Optionally, an embodiment of this application further provides a computer-readable storage medium. All or some of the procedures in the foregoing method embodiments may be implemented by a computer program instructing related hardware. The program may be stored in the computer-readable storage medium. When the program is executed, the procedures in the foregoing method embodiments may be included. The computer-readable storage medium may be an internal storage unit of the communication apparatus according to any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, an embodiment of this application further provides a computer program product. All or some of the procedures in the foregoing method embodiments may be implemented by a computer program instructing related hardware. The program may be stored in the computer program product. When the program is executed, the procedures in the foregoing method embodiments may be included.

Optionally, an embodiment of this application further provides computer instructions. All or some of the procedures in the foregoing method embodiments may be implemented by a computer instruction instructing related hardware (such as a computer, a processor, or a second communication apparatus). The program may be stored in the computer-readable storage medium or the computer program product.

Optionally, an embodiment of this application further provides a communication system, including the first communication apparatus and the second communication apparatus in the foregoing embodiments.

The foregoing descriptions about implementations allow a person skilled in the art to clearly understand that, for the purpose of convenient and brief description, division of the foregoing functional modules is merely used as an example for description. In actual application, the foregoing functions may be allocated to different functional modules for completion based on a requirement, that is, an inner structure of the apparatus is divided into different functional modules to complete all or some of the functions described above.

In the several embodiments provided in this application, it should be understood that the disclosed apparatus and method may be implemented in other manners. For example, the apparatus embodiment described above is merely an example. For example, module or unit division is merely logical function division and there may be another division manner in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, that is, may be located in one place, or may be distributed in different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, wherein the method comprises:
obtaining first data in a first data set, and starting a first timer;
when the first timer expires, updating a first state variable to a first count value, wherein the first count value is greater than a largest count value, data corresponding to the first count value is not received, the first state variable indicates a count value of a first piece of data to be delivered, and the largest count value is a count value of data with a largest count value in a second data set, or the largest count value is a count value of data with a largest count value in received data in the second data set.

2. The method according to claim 1, wherein the method further comprises:
when a first condition is met, stopping the first timer, wherein the first condition comprises any one or more of the following:
the first data set or the second data set is discarded; or
data in the first data set or data in the second data set is delivered; or
the data in the first data set or the data in the second data set does not exist in a reception buffer; or
the first state variable is greater than the largest count value.

3. The method according to claim 1 or 2, wherein the method further comprises:
starting a second timer, wherein the second timer is associated with a third data set, and the third data set is different from the first data set.

4. The method according to claim 3, wherein the starting a second timer comprises:
if data in the third data set is not obtained, starting the second timer, wherein a count value of data with a largest count value in the third data set is less than a smallest count value, and the smallest count value is a count value of data with a smallest count value in the first data set, or the smallest count value is a count value of data with a smallest count value in received data in the first data set.

5. A data transmission method, wherein the method comprises:
sending, by a first communication apparatus, first data in a first data set to a second communication apparatus;
obtaining, by the second communication apparatus, the first data, and starting a first timer; and
when the first timer expires, updating, by the second communication apparatus, a first state variable to a first count value, wherein the first count value is greater than a largest count value, data corresponding to the first count value is not received, the first state variable indicates a count value of a first piece of data to be delivered, and the largest count value is a count value of data with a largest count value in a second data set, or the largest count value is a count value of data with a largest count value in received data in the second data set.

6. The method according to claim 5, wherein the method further comprises:
when a first condition is met, stopping, by the second communication apparatus, the first timer, wherein the first condition comprises any one or more of the following:
the first data set or the second data set is discarded; or
data in the first data set or data in the second data set is delivered; or
the data in the first data set does not exist in a reception buffer; or
the first state variable is greater than the largest count value.

7. The method according to claim 5 or 6, wherein the method further comprises:
starting, by the second communication apparatus, a second timer, wherein the second timer is associated with a third data set, and the third data set is different from the first data set.

8. The method according to claim 7, wherein the starting, by the second communication apparatus, a second timer comprises:
if data in the third data set is not obtained, starting, by the second communication apparatus, the second timer, wherein a count value of data with a largest count value in the third data set is less than a smallest count value, and the smallest count value is a count value of data with a smallest count value in the first data set, or the smallest count value is a count value of data with a smallest count value in received data in the first data set.

9. The method according to any one of claims 1 to 8, wherein the first data set comprises some or all data in the second data set.

10. The method according to any one of claims 1 to 9, wherein the first data set comprises a data burst or a protocol data unit set.

11. The method according to any one of claims 1 to 10, wherein the first timer is associated with the first data set.

12. The method according to any one of claims 1 to 11, wherein the first data is a first piece of obtained data in the first data set.

13. The method according to claim 3, 4, 7, or 8, wherein duration of the second timer is less than duration of the first timer.

14. A data transmission method, wherein the method comprises:
obtaining first data, and starting a third timer; and
when the third timer expires, updating a first state variable to a second count value, wherein the second count value is greater than a count value of the first data, data corresponding to the second count value is not received, and the first state variable indicates a count value of a first piece of data to be delivered.

15. The method according to claim 14, wherein the method further comprises:
when a second condition is met, stopping the third timer, wherein the second condition comprises any one or more of the following:
the first data is discarded; or
a first data set or a second data set is discarded; or
the first data is delivered; or
data in the first data set or data in the second data set is delivered; or
the first data does not exist in a reception buffer; or
the data in the first data set or the data in the second data set does not exist in the reception buffer; or
the first state variable is greater than the count value of the first data; or
the first state variable is greater than a largest count value, wherein
the largest count value is a count value of data with a largest count value in the second data set, or the largest count value is a count value of data with a largest count value in received data in the second data set.

16. The method according to claim 14 or 15, wherein the method further comprises:
starting a fourth timer, wherein the fourth timer is associated with second data, and the second data is different from the first data.

17. The method according to claim 16, wherein the starting a fourth timer comprises:
if the second data is not obtained, starting the fourth timer, wherein a count value of the second data is less than the count value of the first data.

18. A data transmission method, wherein the method comprises:
sending, by a first communication apparatus, first data to a second communication apparatus;
obtaining, by the second communication apparatus, the first data, and starting a third timer; and
when the third timer expires, updating, by the second communication apparatus, a first state variable to a second count value, wherein the second count value is greater than a count value of the first data, data corresponding to the second count value is not received, and the first state variable indicates a count value of a first piece of data to be delivered.

19. The method according to claim 18, wherein the method further comprises:
when a second condition is met, stopping, by the second communication apparatus, the third timer, wherein the second condition comprises any one or more of the following:
the first data is discarded; or
a first data set or a second data set is discarded; or
the first data is delivered; or
data in the first data set or data in the second data set is delivered; or
the first data does not exist in a reception buffer; or
the data in the first data set or the data in the second data set does not exist in the reception buffer; or
the first state variable is greater than the count value of the first data; or
the first state variable is greater than a largest count value, wherein
the largest count value is a count value of data with a largest count value in the second data set, or the largest count value is a count value of data with a largest count value in received data in the second data set.

20. The method according to claim 18 or 19, wherein the method further comprises:
starting, by the second communication apparatus, a fourth timer, wherein the fourth timer is associated with second data, and the second data is different from the first data.

21. The method according to claim 20, wherein the starting, by the second communication apparatus, a fourth timer comprises:
if the second data is not obtained, starting, by the second communication apparatus, the fourth timer, wherein a count value of the second data is less than the count value of the first data.

22. The method according to any one of claims 14 to 21, wherein the second count value is greater than the largest count value.

23. The method according to claim 15 or 19, wherein the first data set comprises a data burst or a protocol data unit set.

24. The method according to claim 15 or 19, wherein the first data set comprises some or all data in the second data set.

25. The method according to claim 15, 19, or 23, wherein the first data set comprises a data burst or a protocol data unit set.

26. The method according to any one of claims 14 to 25, wherein the third timer is associated with the first data.

27. The method according to claim 16, 17, 20, or 21, wherein duration of the fourth timer is less than duration of the third timer.

28. A communication apparatus, comprising a unit or a module configured to perform the method according to any one of claims 1 to 4 and claims 9 to 13, or comprising a unit or a module configured to perform the method according to any one of claims 14 to 17 and claims 22 to 27.

29. A communication apparatus, comprising a processor, wherein the processor is coupled to a memory, and the memory is configured to store a program or instructions; and when the program or the instructions are executed by the processor, the apparatus is enabled to perform the method according to any one of claims 1 to 4 and claims 9 to 13, or perform the method according to any one of claims 14 to 17 and claims 22 to 27.

30. A computer-readable storage medium, wherein the computer-readable storage medium stores a computer program or instructions; and when the computer program or the instructions are executed, a computer is enabled to perform the method according to any one of claims 1 to 4 and claims 9 to 13, or the method according to any one of claims 14 to 17 and claims 22 to 27.

31. A computer program product, wherein the computer program product comprises computer program code; and when the computer program code is run on a computer, the computer is enabled to implement the method according to any one of claims 1 to 4 and claims 9 to 13, or implement the method according to any one of claims 14 to 17 and claims 22 to 27.
